(19) **Europäisches Patentamt**
**European Patent Office**
**Office européen des brevets**

(11) **EP 2 425 990 B1**

(12) **EUROPEAN PATENT SPECIFICATION**

(45) Date of publication and mention of the grant of the patent:
**24.12.2014 Bulletin 2014/52**

(51) Int Cl.:
***B60C 1/00*** *(2006.01)* ***B60C 13/02*** *(2006.01)*
***C08C 19/44*** *(2006.01)* ***C08K 3/04*** *(2006.01)*

(21) Application number: **10769842.5**

(22) Date of filing: **30.04.2010**

(86) International application number:
**PCT/JP2010/057710**

(87) International publication number:
**WO 2010/126144 (04.11.2010 Gazette 2010/44)**

(54) **TIRE**

REIFEN

PNEU

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **30.04.2009 JP 2009111530**

(43) Date of publication of application:
**07.03.2012 Bulletin 2012/10**

(73) Proprietor: **Bridgestone Corporation Tokyo 104-8340 (JP)**

(72) Inventors:
• **MATSUO, Shigeaki Kodaira-shi Tokyo 187-8531 (JP)**

• **YAMAGUCHI, Masashi Kodaira-shi Tokyo 187-8531 (JP)**

(74) Representative: **Oxley, Robin John George et al Marks & Clerk LLP 90 Long Acre London WC2E 9RA (GB)**

(56) References cited:
**EP-A1- 1 479 698      EP-A1- 2 130 841
EP-A1- 2 130 842      WO-A1-2008/114668
JP-A- 2009 029 404      US-A1- 2008 103 261**

• **DATABASE WPI Week 200917 Thomson Scientific, London, GB; AN 2009-E63413 XP002696346, & JP 2009 029404 A (BRIDGESTONE CORP) 12 February 2009 (2009-02-12)**

Printed by Jouve, 75001 PARIS (FR)

**Description**

Technical Field

The present invention relates to a tire, in particular, a tire which is capable of reducing the temperature of a tire side portion having a side-reinforcing layer that is apt to deteriorate and which is excellent in run-flat property.

Background Art

An increase in the temperature of a pneumatic tire is not preferred from the viewpoint of durability because the increase of the temperature accelerates a change over time such as a change in physical properties of a material, or is responsible for, for example, the rupture of a tread at the time of high-speed running. In particular, a reduction in tire temperature for the durability improvement has been a large problem in an off-the-road radial (ORR) tire to be used under a heavy load, a truck/bus radial (TBR) tire, or a run-flat tire at the time of puncture running (at the time of running at an internal pressure of 0 kPa). For example, in a run-flat tire having a crescent-shaped reinforcing rubber, deformation in its radial direction converges on the reinforcing rubber at the time of puncture running, and the temperature of the portion on which the deformation converges reaches an extremely high value, which significantly affects its durability. JP2007167821 discloses a tire with run flat durability without impared rolling resistance or ride quality. WO2008/114668 discloses a tire with turbulent flow generating projections.

Disclosed as means for reducing the tire temperature of a pneumatic tire is a technology involving providing a reinforcing member for reducing and suppressing the distortion of each constituting member (especially, for example, a carcass layer positioned at a side-wall portion or a bead portion) of the pneumatic tire to prevent a temperature increase due to the distortion of the tire to the extent possible (see, for example, Patent Literature 1).

However, in the above-mentioned conventional pneumatic tire, providing the reinforcing member may involve the emergence of an unintended new failure such as an increase in tire weight or separation at the reinforcing member. As a result, the following problem arises. Normal-running performance such as maneuvering stability or riding comfort is deteriorated. In particular, in a run-flat tire, the following concern has been raised. A vertical spring (elasticity in the vertical direction of the tire) at the time of running at a normal internal pressure increases to deteriorate the normal-running performance. Accordingly, an approach that does not impair the normal-running performance has been requested.

The placement of a large number of ridges on the rim guard of a flat pneumatic tire provided with the rim guard has been known as another means for reducing the tire temperature of a pneumatic tire.

A technology for accelerating the heat radiation of the above-mentioned pneumatic tire involves increasing the surface area of the tire to accelerate the heat radiation. However, merely increasing the surface area of the tire cannot result in efficient heat radiation because a rubber material having low thermal conductivity is placed on the outer circumference side of the pneumatic tire.

In contrast, in terms of a rubber composition, the use of various rubber compositions each containing a modif ied conj ugated diene-aromatic vinyl copolymer, a heat resistance improver, and the like in a side-reinforcing layer and a bead filler has been proposed (see Patent Literature 2).

Further, the use of a rubber composition containing a specific conjugated diene-based polymer and a phenol-based resin in each of a side-reinforcing layer and a bead filler has been proposed (see Patent Literature 3).

Each of those literatures intends to increase the elastic modulus of the rubber composition used ineachof the side-reinforcing layer and the bead filler and to suppress a reduction in elastic modulus at high temperatures. Although a significant improvement in run-flat durability is achieved by any such literature, rolling resistance at the time of normal running remarkably deteriorates.

Incidentally, a large number of technologies concerning a modified rubber for a rubber composition using silica or carbon black as a filler have been heretofore developed in order that a rubber composition having low heat generating property may be obtained. Of those, in particular, a method involving modifying a polymerization-active terminal of a conjugateddiene-based polymer, which is obtained by anionic polymerization with a lithium compound, with an alkoxysilane derivative containing a functional group that interacts with the filler has been proposed as an effective one (see, for example, Patent Literature 4 or 5).

Inaddition, the following method of producing a modified polymer has been disclosed (see Patent Literature 6). Such a modification reaction that a hydrocarbyloxysilane compound is caused to react with an organometallic active site of a polymer having the active site in a molecule thereof is performed, and a condensation-accelerating agent is added to a reaction system during and/or after the completion of the reaction. A rubber composition using the modified polymer obtained by the above-mentioned production method shows a significant improvement in its low-loss effect on a silica-based filler. However, it cannot be said that the composition exerts a sufficient low-loss effect on a carbon black filler.

Therefore, a rubber composition capable of simultaneously improving durability at the time of run-flat running and rolling resistance at the time of normal running, suitable for a side-reinforcing layer or a bead filler, and excellent in low heat generating property has been requested.

Citation List

Patent Literature

[PTL 1] JP 2006-76431 A

[PTL 2] WO 02/02356
[PTL 3] JP 2004-74960 A
[PTL 4] JP 06-53763 B
[PTL 5] JP 06-57767 B
[PTL 6] WO 03/087171

Summary of Invention

Technical Problem

In view of the foregoing, the present invention has been made to solve the above-mentioned problems, and an object of the present invention is to provide such a tire whose durability can be improved that a reduction in temperature inside a tire side portion can be achieved by efficient heat radiation, and durability at the time of run-flat running and rolling resistance at the time of normal running can be simultaneously improved with its rubber composition.

Solution to Problem

The inventors of the present invention have made extensive studies to achieve the object, and as a result, have found that the object of the present invention is achieved by: providing the tire surface of a tire side portion with specific turbulent flow-creating ridges, which extend from an inner circumference side to an outer circumference side, at intervals in the circumferential direction of a tire; and using, in the tire, a rubber composition containing a modified conjugated diene-based polymer that excellently interacts with carbon black having a specific nitrogen adsorption specific surface area, the composition being obtained by modifying a terminal of a conjugated diene-based polymer obtained by polymerization in an organic solvent with a specific modifying agent. The present invention has been completed on the basis of such finding.
That is, the present invention provides a pneumatic tire including turbulent flow-creating ridges extending from an inner circumference side to an outer circumference side, the turbulent flow-creating ridges being provided for a tire surface of a tire side portion at intervals in a circumferential direction of the tire, in which: the turbulent flow-creating ridges each have an edge portion when viewed in a section in a radial direction, and front wall surfaces thereof on which an air flow impinges each form a front wall angle in a range of 70° to 110° with respect to the tire surface; and a rubber composition obtained by compounding 100 parts by mass of rubber components containing 10 mass% or more of a modified conjugated diene-based polymer, which is obtained by introducing a primary amino group or a precursor capable of producing a primary amino group through hydrolysis to a terminal of a conjugated diene-based polymer through a modification reaction between the terminal and an alkoxysilane compound having the primary amino group or the precursor capable of producing a primary amino group through hydrolysis, and adding a condensation-accelerating agent to the modification reaction system during and/or after completion of the modification reaction, with 10 to 100 parts by mass of carbon black having a nitrogen adsorption specific surface area of 20 to 90 $m^2/g$ is used in a side-reinforcing rubber for constituting the tire side portion.

Advantageous Effects of Invention

According to the present invention, the following effects can be exerted:

(1) efficient heat radiation is performed by providing the side surface with the turbulent flow-creating ridges, and as a result, a reduction in temperature inside the tire side portion is achieved with reliability and durability is improved; and
(2) there can be provided such a tire that the heat generation of the side-reinforcing rubber is suppressed by using a rubber composition having low rolling resistance in the side-reinforcing rubber, the tire temperature can be additionally reduced by a combination of the use with the above-mentioned turbulent flow-creating ridges, and durability at the time of run-flat traveling and low rolling resistance at the time of normal running can be simultaneously improved.

Brief Description of Drawings

[FIG. 1] FIG. 1 is a partially notched perspective view of a run-flat tire according to an embodiment of the present invention.
[FIG. 2] FIG. 2 is a sectional view of the main portion of the run-flat tire according to the embodiment of the present invention.
[FIG. 3] FIG. 3 is a partial side view of the run-flat tire according to the embodiment of the present invention.
[FIG. 4] FIG. 4 is a perspective view illustrating a state in which a turbulent flow is created by a turbulent flow-creating ridge.
[FIG. 5] FIG. 5 is a side view illustrating the state in which the turbulent flow is created by the turbulent flow-creating ridge.
[FIG. 6] FIG. 6 is a side view illustrating the flow of a turbulent flow in detail.
[FIG. 7] FIG. 7 is a sectional view of a turbulent flow-creating ridge according to a first modified example.
[FIG. 8] FIG. 8 is a sectional view of a turbulent flow-creating ridge according to a second modified example.
[FIG. 9] FIG. 9 is a sectional view of a turbulent flow-creating ridge according to a third modified example.
[FIG. 10] FIG. 10 is a sectional view of a turbulent flow-creating ridge according to a fourth modified example.

Description of Embodiments

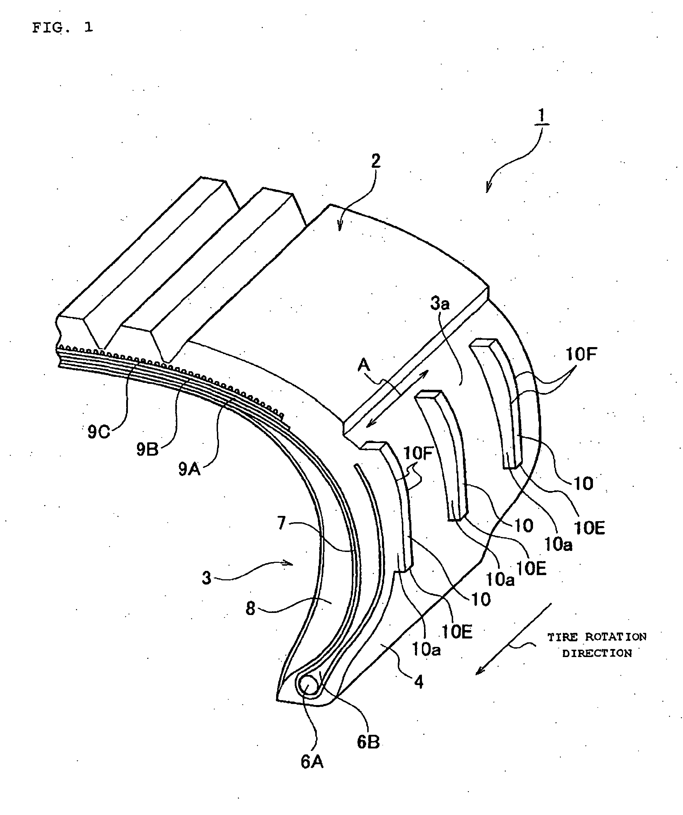

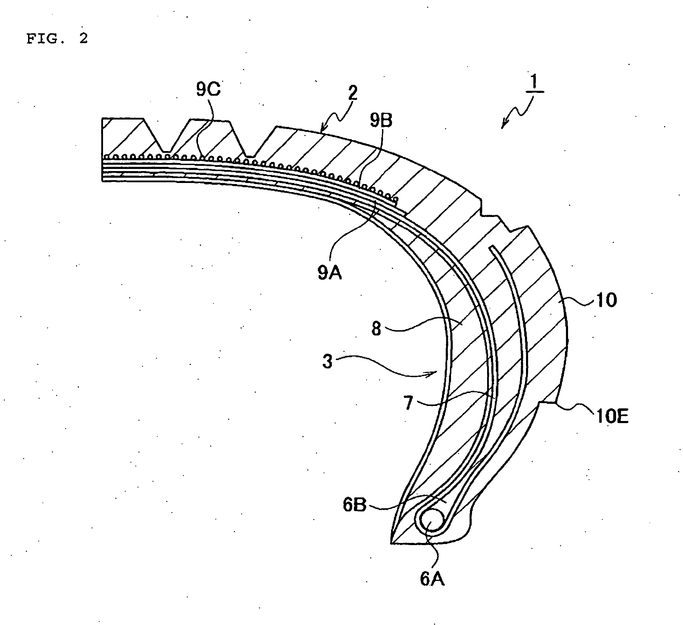

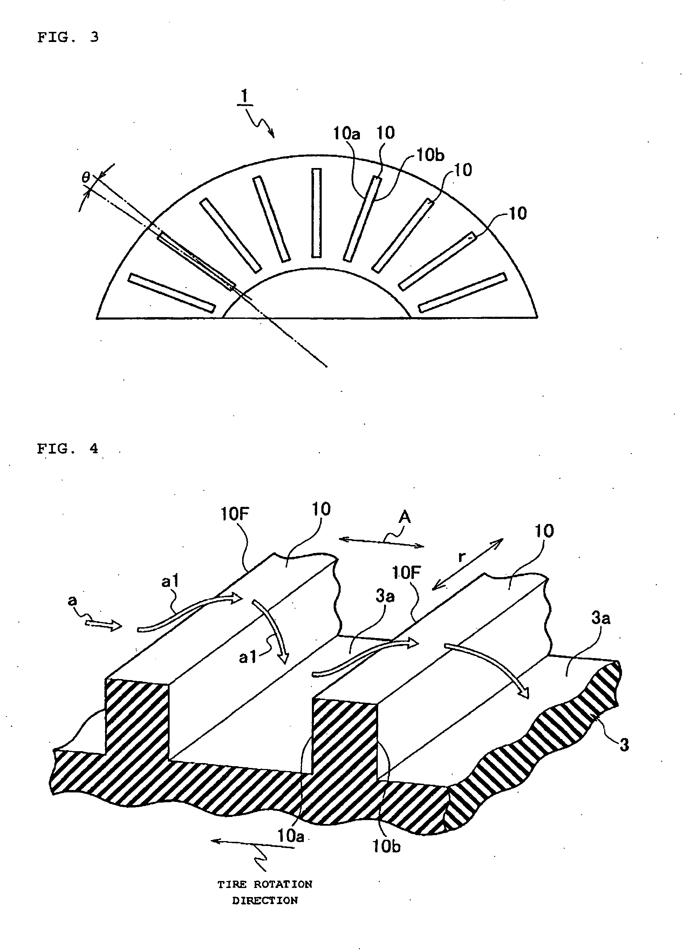

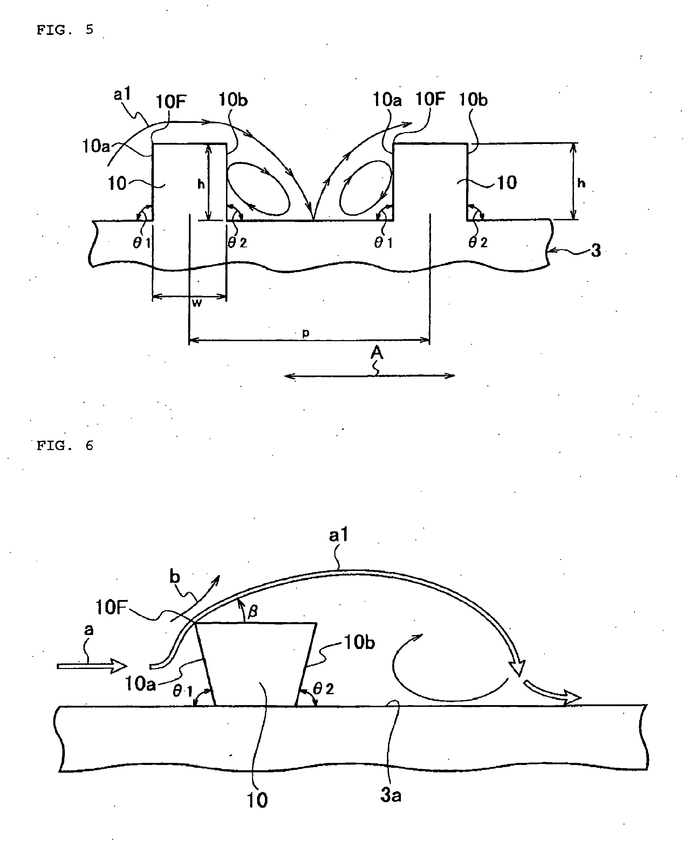

Hereinafter, an embodiment of the present invention is described with reference to drawings. FIGS. 1 to 6 each illustrate an embodiment of the present invention. FIG. 1 is a partially notched perspective view of a run-flat tire, FIG. 2 is a sectional view of the main portion of the run-flat tire, FIG. 3 is a partial side view of the run-flat tire, FIG. 4 is a perspective view illustrating a state in which a turbulent flow is created by a turbulent flow-creating ridge, FIG. 5 is a side view illustrating the state in which the turbulent flow is created by the turbulent flow-creating ridge, and FIG. 6 is a side view illustrating the flow of a turbulent flow in detail.

(Schematic constitution of run-flat tire)

As illustrated in FIGS. 1 and 2, a run-flat tire 1 as a tire includes a tread portion 2 that contacts a road surface, a tire side portion 3 on each of both sides of the tire, and a bead portion 4 provided along the opening edge of each of the tire side portion 3.
The bead portion 4 includes a bead core 6A and a bead filler 6B provided so as to circulate along the edge portion of the opening portion of the tire side portion 3. A bead wire or the like is specifically used as the bead core 6A.
Provided inside the tread portion 2, the pair of tire side portions 3, and the pair of bead portions 4 is a carcass layer 7 serving as the skeleton of the tire. A side-reinforcing layer 8 for reinforcing the tire side portion 3 is provided inside (inside the width direction of the tire) the carcass layer 7 positioned at the tire side portion 3. The side-reinforcing layer 8 is formed of a crescent-shaped rubber composition in a section in the width direction of the tire. A tire of the present invention can exert any such action or effect as described above by using, in the side-reinforcing layer 8, a rubber composition of the present invention containing a modified conjugated diene-based polymer that excellently interacts with carbon black and has low rolling property.
Provided inside the tread portion 2 and outside the carcass layer 7 in the radial direction of the tire are a plurality of belt layers (steel belt reinforcing layers 9A and 9B, and a circumferential direction reinforcing layer 9C).
An outside surface 3a as the tire surface of each tire side portion 3 is provided with turbulent flow-creating ridges 10, which extend from an inner circumference side to an outer circumference side, at an equal interval in the circumferential direction of the tire.
Provided inside the tread portion 2 and outside the carcass layer 7 in the radial direction of the tire are the plurality of belt layers (the steel belt reinforcing layers 9A and 9B, and the circumferential direction reinforcing layer 9C). The outside surface 3a as the tire surface of each tire side portion 3 is provided with the turbulent flow-creating ridges 10, which extend from the inner circumference side to the outer circumference side, at an equal interval in the circumferential direction of the tire.
It should be noted that the constitution of each turbulent flow-creating ridge and the like are described in detail after the description of the following modified conjugated diene-based polymer.

(Modified conjugated diene-based polymer)

The modified conjugated diene-based polymer to be compounded into the rubber composition to be used in the side-reinforcing layer 8 of the tire of the present invention has the following feature. The polymer is obtained by: introducing a primary amino group or a precursor capable of producing a primary amino group through hydrolysis to a terminal of a conjugated diene-based polymer through a modification reaction between the terminal and an alkoxysilane compound having the primary amino group or the precursor capable of producing a primary amino group through hydrolysis; and adding a condensation-accelerating agent to the modification reaction system during and/or after the completion of the modification reaction. The primary amino group is produced as described below. The precursor capable of producing a primary amino group through hydrolysis is introduced in a state before hydrolysis (that is, a protected state) to the terminal through the modification reaction, and is subjected to, for example, a desolvation treatment or water treatment involving using steam such as steam stripping after the completion of the modification reaction or is intentionally hydrolyzed to produce the primary amino group. It should be noted that even when the precursor capable of producing a primary amino group through hydrolysis exists in the modified conjugated diene-based polymer without being hydrolyzed, the precursor capable of producing a primary amino group may not be hydrolyzed at a stage before the kneading of the modified conjugated diene-based polymer because of the following reason. The protective group with which the primary amino group is protected at the time of the kneading is detached so that the primary amino group may be produced.

Although a modified conjugated diene-based polymer modified with an alkoxysilane compound free of any primary amino group interacts with silica to a high degree, the polymer has low reinforcing property on carbon black because the polymer interacts with the carbon black to a low degree. On the other hand, the modified conjugated diene-based polymer modified with the alkoxysilane compound having a primary amino group has high reinforcing property on the carbon black because the primary amino group and the carbon black interact with each other to a high degree.

In addition, molecules of a modified conjugated diene-based polymer modified with an alkoxysilane compound generally react with each other to have an increased molecular weight, which increases the viscosity of an unvulcanized rubber composition to deteriorate its processability. In contrast, such modified conjugated diene-based polymer modified with the alkoxysilane compound having a primary amino group according to the present invention that the condensation-accelerating agent is added to the reaction system during and/or after the completion of the modification reaction and a condensation reaction is advanced in the presence of steam or water does not increase the viscosity of the unvulcanized rubber composition to deteriorate its processability because an excessive increase in the molecular weight of the modified conjugated diene-based polymer is prevented.

The rubber composition according to the present invention must contain 10 mass% or more of the modified conjugated diene-based polymer in 100 parts by mass of the rubber components. As long as the content of the modified conjugated diene-based polymer in 100 parts by mass of the rubber components is 10 mass% or more, the low heat generating property of the rubber composition is exerted, and hence durability at the time of run-flat running and rolling resistance at the time of normal running are improved. In order that the low heat generating property of the rubber composition may be additionally improved, the content of the modified conjugated diene-based polymer is more preferably 52 mass% or more, particularly preferably 55 mass% or more in 100 parts by mass of the rubber components.

The conjugated diene-based polymer according to the present invention is obtained by polymerizing a conjugated diene compound alone or by copolymerizing the conjugated diene compound and an aromatic vinyl compound. A production method for the polymer is not particularly limited, and any one of a solution polymerization method, a vapor phase polymerization method, and a bulk polymerization method can be employed. Of those, the solution polymerization method is particularly preferred. In addition, a polymerization type may be any one of a batch type and a continuous type. Of those, the batch type is desirable in order that a molecular weight distribution may be narrowed.

In addition, the conjugated diene-based polymer preferably has a glass transition temperature of -30°C or less.

The conjugated diene compound includes, for example, 1,3-butadiene, isoprene, 1,3-pentadiene, 2,3-dimethyl-1,3-butadiene, 2-phenyl-1,3-butadiene, 1, 3-hexadiene and the like. They may be used alone or in combination of two or more kinds thereof. Of those, 1,3-butadiene is particularly preferred.

Further, the aromatic vinyl compound used in copolymerization with the conjugated diene copolymer includes, for example, styrene, a -methylstyrene, 1-vinylnaphthalene, 3-vinyltoluene, ethylvinylbenzene, divinylbenzene, 4-cyclohexylstyrene, and 2,4,6-trimethylstyrene. They may be used alone or in combination of two or more kinds thereof. Of those, styrene is particularly preferred.

Next, a polymerization reaction system is described. In order that the primary amino group or the precursor capable of producing a primary amino group through hydrolysis may be introduced through a reaction between a terminal of a living conjugated diene-based polymer in such a state that a polymerization reaction is not terminated (which may hereinafter be referred to as "active terminal") and a modifying agent, the polymer to be used is preferably such that at least 10% of its polymer chain has living property or pseudo-living property. A polymerization reaction having such living property is, for example, a reaction in which the conjugated diene compound alone is, or the conjugated diene compound and the aromatic vinyl compound are, subjected to anionic polymerization in an organic solvent with an alkali metal compound as an initiator, or a reaction in which the conjugated diene compound alone is, or the conjugated diene compound and the aromatic vinyl compound are, subjected to coordination anionic polymerization with a catalyst containing a lanthanum series rare earth element compound.

A lithium compound is preferably used as the alkali metal compound to be used as the initiator for the anionic polymerization described above. No particular limitation is imposed on the lithium compound, and a hydrocarbyllithium and a lithium amide compound are preferably used. When the hydrocarbyllithium is used, a conjugated diene-based polymer having a hydrocarbyl group at a polymerization-initiating terminal and a polymerization active site at the other terminal is obtained. Further, when the lithium amide compound is used, a conjugated diene-based polymer having a nitrogen-containing group at a polymerization-initiating terminal and a polymerization active site at the other terminal is obtained.

The hydrocarbyllithium is preferably a compound having a hydrocarbyl group having 2 to 20 carbon atoms. Examples thereof include ethyllithium, n-propyllithium, isopropyllithium, n-butyllithium, sec-butyllithium, tert-octyllithium, n-decyllithium, phenyllithium, 2-naphthyllithium, 2-butylphenyllithium, 4-phenylbutyllithium, cyclohexyllithium, cyclopentyllithium, and a reaction product of diisopropenylbenzene with butyllithium. Of those, n-butyllithium is particularly suited.

On the other hand, the lithium amide compound includes, for example, lithium hexamethyleneimide, lithium pyrrolidide, lithium piperidide, lithium heptamethyleneimide, lithium dodecamethyleneimide, lithium dimethylamide, lithium diethylamide, lithium dipropylamide, lithium dibutylamide, lithium dihexylamide, lithium diheptylamide, lithium dioctylamide, lithium di-2-ethylhexylamide, lithium didecylamide, lithium-N-methylpiperazide, lithium ethylpropylamide, lithium ethylbutylamide, lithium methylbutylamide, lithium ethylbenzylamide, lithium methylphenethylamide, N-lithiomorpholine, N-methyl-N'-lithiohomopiperazine, N-ethyl-N'-lithiohomopiperazine, and N-butyl-N'-lithiohomopiperazine. Of those, cyclic lithium amides such as lithium hexamethyleneimide, lithium pyrrolidide, lithium piperidide, lithium heptamethyleneimide, and lithium dodecamethyleneimide are preferred, and lithium hexamethyleneimide and lithium pyrrolidide are particularly preferred.

In a preferred embodiment, the lithium amide compound is produced in advance in the presence of such solubilizing component (SOL) as disclosed in JP 06-206920 A or in the absence of any solubilizing component as disclosed in JP 06-199922 A, and then the compound can be used as a polymerization initiator. Alternatively, as disclosed in JP 06-199921 A, the lithium amide compound is produced in a polymerization system (in situ) without any preliminary adjustment, and the compound can be used as a polymerization initiator.

Further, the use amount of the polymerization initiator is preferably selected in the range of 0.2 to 20 mmol per 100 g of the monomer.

No particular limitation is imposed on the method of producing a conjugated diene-based polymer through anionic polymerization employing the lithium compound serving as a polymerization initiator, and any conventionally known methods may be employed.

Specifically, in an organic solvent which is inert to the reaction such as a hydrocarbon-based solvent including aliphatic, alicyclic, and aromatic hydrocarbon compounds, a conjugated diene compound or a mixture of a conjugated diene compound and an aromatic vinyl compound is anionically polymerized in the presence of the lithium compound serving as a polymerization initiator and a randomizer used in accordance with needs, thereby producing a conjugated diene-based polymer of interest having an active terminal.

In addition, in the case where the lithium compound is used as the polymerization initiator, not only the conjugated diene-based polymer having an active terminal but also the copolymer of the conjugated diene compound having an active terminal and the aromatic vinyl compound can be obtained with higher efficiency than that in the case where the catalyst containing a lanthanum series rare earth element compound described above is used.

The hydrocarbon-based solvent is preferably a hydrocarbon having 3 to 8 carbon atoms. Examples thereof include propane, n-butane, isobutane, n-pentane, isopentane, n-hexane, cyclohexane, propene, 1-butene, isobutene, trans-2-butene, cis-2-butene, 1-pentene, 2-pentene, 1-hexene, 2-hexene, benzene, toluene, xylene, ethylbenzene, methylcyclopentane, and methylcyclohexane. They may be used alone or in combination of two or more kinds thereof.

In addition, a monomer concentration in the solvent is preferably 5 to 50 mass%, more preferably 10 to 30 mass%. It should be noted that, when copolymerization is carried out with the conjugated diene compound and the aromatic vinyl compound, the content of the aromatic vinyl compound in a mixture of the loaded monomers is preferably in the range of 55 mass% or less.

Further, the randomizer, which may be used in accordance with needs, is a compound which is capable of controlling a microstructure of a conjugated diene-based polymer such as increasing 1,2-bonds of the butadiene moieties in a butadiene-styrene copolymer or 3,4-bonds in an isoprene polymer or controlling the monomer unit composition distribution in a conjugated diene compound-aromatic vinyl compound copolymer such as randomizing butadiene units and styrene units in a butadiene-styrene copolymer. No particular limitation is imposed on the type of the randomizer, and any of known compounds conventionally used as a randomizer may appropriately employed. Specific examples of the randomizer include ethers and tertiary amines such as dimethoxybenzene, tetrahydrofuran, dimethoxyethane, diethylene glycol dibutyl ether, diethylene glycol dimethyl ether, oxolanylpropane oligomers [in particular, those including 2,2-bis(2-tetrahydrofuryl)-propane], triethylamine, pyridine, N-methylmorpholine, N,N,N',N'-tetramethylethylenediamine, and 1,2-piperidinoethane. Further, potassium salts such as potassium t-amylate and potassium t-butoxide and sodium salts such as sodium t-amylate may also be employed.

Those randomizers may be used alone or in combination of two or more kinds thereof. The use amount of the randomizer is preferably selected in the range of 0.01 to 1000 mole equivalents per mole of the lithium compound.

The temperature of the polymerization reaction is preferably selected in the range of 0 to 150°C, more preferably 20 to 130°C. The polymerization reaction may be carried out under generated pressure, but generally desirably performed under such pressure that the monomer is maintained virtually as a liquid phase. That is, a higher pressure may be employed in accordance with needs, although depending on the individual substances to be polymerized, and the polymerization solvent and polymerization temperature to be used. Such pressure may be obtained through an appropriate method such as applying pressure to a reactor by use of gas inert to the polymerization reaction.

In the present invention, a modifying agent to be described later is preferably added to the polymer having an active terminal thus obtained in a stoichiometric amount or an amount exceeding the amount with respect to the active terminal of the polymer so that the modifying agent may be caused to react with the active terminal bonded to the polymer.

An alkoxysilane compound having a precursor capable of producing a primary amino group through hydrolysis is used as a modifying agent for efficiently introducing a primary amino group to the active terminal.

Examples of the compound may include N,N-bis(trimethylsilyl)aminopropylmethyldimethoxysilane, 1-trimethylsilyl-2,2-dimethoxy-1-aza-2-silacyclopentane, N,N-bis(trimethylsilyl)aminopropyltrimethoxysilane, N,N-bis(trimethylsilyl)aminopropyltriethoxysilane, N,N-bis(trimethylsilyl)aminopropylmethyldiethoxysilane, N,N-bis(trimethylsilyl)aminoethyltrimethoxysilane, N,N-bis(trimethylsilyl)aminoethyltriethoxysilane, N,N-bis(trimethylsilyl)aminoethylmethyldimethoxysilane, and N,N-bis(trimethylsilyl)aminoethylmethyldiethoxysilane. Of those, N,N-bis(trimethylsilyl)aminopropylmethyldimethoxysilane, N,N-bis(trimethylsilyl)aminopropylmethyldiethoxysilane, or 1-trimethylsilyl-2,2-dimethoxy-1-aza-2-silacyclopentane is preferred.

One kind of those modifying agents may be used alone, or two or more kinds thereof may be used in combination. In addition, the modifying agent may be a partial condensation product.

In the above case, the partial condensation product is a compound prepared by converting a part (not all) of SiOR in the modifying agent to a SiOSi bond by condensation.

In the modification reaction with the modifying agent, the use amount of the modifying agent is preferably 0.5 to 200 mmol/kg (conjugated diene-based polymer). The use amount is more preferably 1 to 100 mmol/kg (conjugated diene-based polymer), particularly preferably 2 to 50 mmol/kg (conjugated diene-based polymer). In the unit of the amount, the "conjugated diene-based polymer" means the mass of polymer not containing additives such as an age resistor added during or after the production. Through controlling the use amount of the modifying agent so as to fall within the range, excellent dispersibility of fillers can be attained, and a fracture resistance characteristic and low heat generating property after vulcanization can be improved.

It should be noted that no particular limitation is imposed on the method of adding the modifying agent, and one batch addition, divided addition, continuous addition, or the like may be employed. Of those, one batch addition is preferred.

Further, the modifying agent may be bonded to any of a polymerization-initiating terminal, a polymerization-terminating terminal, or other than those, a polymer main chain, and a polymer side chain. From the viewpoint of improvement of the low heat generating property by preventing energy loss from a polymer terminal, the modifying agent is preferably introduced into the polymerization-initiating terminal or the polymerization-terminating terminal.

In the present invention, a specific condensation-accelerating agent is preferably used for accelerating the condensation reaction in which the alkoxysilane compound having a precursor capable of producing a primary amino group through hydrolysis to be used as the modifying agent is involved.

A compound containing a tertiary amino group or an organic compound containing one or more kinds of elements each belonging to any one of Groups 3, 4, 5, 12, 13, 14, and 15 of the periodic table (long-period type) can be used as such condensation-accelerating agent. In addition, the condensation-accelerating agent is preferably an alkoxide, carboxylate, trialkylsiloxane, or acetylacetonato complex salt containing at least one kind of metal selected from the group consisting of titanium (Ti), zirconium (Zr), bismuth (Bi), aluminum (Al), and Tin (Sn).

The condensation-accelerating agent employed in the above case may be added to the reaction system before the modification reaction. However, preferably, the agent is added to the modification reaction system during and/or after the completion of the modification reaction. When the agent is added before the modification reaction, in some cases, the agent directly reacts with the active terminal, thereby failing to introduce a hydrocarbyloxy group having a precursor capable of producing a primary amino group through hydrolysis to the active terminal.

The time at which the condensation-accelerating agent is added is generally 5 minutes to 5 hours after the initiation of the modification reaction, preferably 15 minutes to 1 hour after the initiation of the modification reaction.

Specific examples of the condensation-accelerating agent to be preferably used include an alkoxide, carboxylate, and acetylacetonato complex salt of titanium (Ti).

Specific examples of the condensation-accelerating agent include tetrakis(2-ethyl-1,3-hexanediolato)titanium, tetrakis(2-methyl-1,3-hexanediolato)titanium, tetrakis(2-propyl-1,3-hexanediolato)titanium, tetrakis(2-butyl-1,3-hexanediolato)titanium, tetrakis(1,3-hexanediolato)titanium, tetrakis(1,3-pentanediolato)titanium, tetrakis(2-methyl-1,3-pentanediolato)titanium, tetrakis(2-ethyl-1,3-pentanediolato)titanium, tetrakis(2-propyl-1,3-pentanediolato)titanium, tetrakis(2-butyl-1,3-pentanediolato)titanium, tetrakis(1,3-heptanediolato)titanium, tetrakis(2-methyl-1,3-heptanediolato)titanium, tetrakis(2-ethyl-1,3-heptanediolato)titanium, tetrakis(2-propyl-1,3-heptanediolato)titanium, tetrakis(2-butyl-1,3-heptanediolato)titanium, tetrakis(2-ethylhexoxy)titanium, tetramethoxytitanium, tetraethoxytitanium, tetra-n-propoxytitanium, tetraisopropoxytitanium, tetra-n-butoxytitanium, a tetra-n-butoxytitanium oligomer, tetraisobutoxytitanium, tetra-sec-butoxytitanium, tetra-tert-butoxytitanium, bis(oleato)bis(2-ethylhexanoato)titanium, titanium dipropoxybis(triethanolaminate), titanium dibutoxybis(triethanolaminate), titanium tributoxystearate, titanium tripropoxystearate, titanium tripropoxyacetylacetonate, titanium dipropoxybis(acetylacetonate), titanium tripropoxy(ethylacetoacetate), titanium propoxyacetylacetonatobis(ethylacetoacetate), titanium tributoxyacetylacetonate, titanium dibutoxybis(acetylacetonate), titanium tributoxyethylacetoacetate, titanium butoxyacetylacetonatobis(ethylacetoacetate), titanium tetrakis(acetylacetonate), titanium diacetylacetonatobis(ethylacetoacetate), bis(2-ethylhexanoato)titanium oxide, bis (laurato) titanium oxide, bis(naphthenato)titanium oxide, bis(stearato)titanium oxide, bis(oleato)titanium oxide, bis(linolato)titanium oxide, tetrakis(2-ethylhexanoato)titanium, tetrakis(laurato)titanium, tetrakis(naphthenato)titanium, tetrakis(stearato)titanium, tetrakis(oleato)titanium, tetrakis(linolato)titanium, titanium di-n-butoxide(bis-2,4-pentanedione), titanium oxide bis(stearate), titanium oxide bis(tetramethylheptanedionate), titanium oxide bis(pentanedionate), and titanium tetra(lactate). Of those, tetrakis(2-ethyl-1,3-hexanediolato)titanium, tetrakis(2-ethylhexoxy)titanium, and titanium di-n-butoxide(bis-2,4-pentanedionate) are preferred.

Further, examples of the condensation-accelerating agent include tris (2-ethylhexanoato)bismuth, tris(laurato)bismuth, tris(naphthenato)bismuth, tris(stearato)bismuth, tris(oleato)bismuth, tris(linolato)bismuth, tetraethoxyzirconium, tetra-n-propoxyzirconium, tetra-isopropoxyzirconium, tetra-n-butoxyzirconium, tetra-sec-butoxyzirconium, tetra-tert-butoxyzirconium, tetra(2-ethylhexyl)zirconium, zirconium tributoxystearate, zirconium tributoxyacetylacetonate, zirconium dibutoxy bis(acetylacetonate), zirconium tributoxyethylacetoacetate, zirconium butoxyacetylacetonatobis(ethylacetoacetate), zirconium tetrakis(acetylacetonate), zirconium diacetylacetonatobis(ethylacetoacetate), bis (2-ethylhexanoato) zirconium oxide, bis (laurato)zirconium oxide, bis(naphthenato)zirconium oxide, bis(stearato)zirconium oxide, bis(oleato)zirconium oxide, bis(linolato)zirconium oxide, tetrakis(2-ethylhexanoato)zirconium, tetrakis(laurato)zirconium, tetrakis(naphthenato)zirconium, tetrakis(stearato)zirconium, tetrakis(oleato)zirconium, and tetrakis(linolato)zirconium.

Further examples include triethoxyaluminum, tri-n-propoxyaluminum, triisopropoxyaluminum, tri-n-butoxyaluminum, tri-sec-butoxyaluminum, tri-tert-butoxyaluminum, tri(2-ethylhexyl) aluminum, aluminum dibutoxystearate, aluminum dibutoxyacetylacetonate, aluminum butoxybis(acetylacetonate), aluminum dibutoxyethylacetoacetate, aluminumtris(acetylacetonate), aluminumtris(ethylacetoacetate), tris(2-ethylhexanoato)aluminum, tris(laurato)aluminum, tris(naphthenato)aluminum, tris(stearato)aluminum, tris(oleato)aluminum, and tris(linolato)aluminum.

Further, examples of the tin-based condensation accelerator suitably include dicarboxylic acid salts {in particular, a bis(hydrocarbylcarboxylic acid)salt} of divalent tin, dicarboxylic acid salts (including a {bis(hydrocarbylcarboxylic acid)} salt) of dihydrocarbyltin of tetravalent tin, bis ($\beta$ -diketonate), alkoxy halides, and monocarboxylic acid salt hydroxides. Specifically, bis(2-ethylhexanoate)tin and the like are given.

Of those condensation-accelerating agents, a titanium compound is preferred, and an alkoxide of titanium metal, a carboxylate of titanium metal, or an acetylacetonato complex salt of titanium metal is particularly preferred.

The use amount of the condensation-accelerating agent is preferably such that the mole ratio of the compounds described above to the total amount of hydrocarbyloxy groups present in the reaction system is 0.1 to 10, particularly preferably 0.5 to 5. Through controlling the use amount of the condensation-accelerating agent so as to fall within the range, the condensation reaction efficiently proceeds.

The condensation reaction in the present invention progresses in the presence of the above-mentioned condensation-accelerating agent and steam or water. When steam is present, for example, a desolvation treatment based on steam stripping is performed, and the condensation reaction progresses during the steam stripping.

Further, the condensation reaction may be carried out in a system in which water is dispersed as drop in an organic solvent or in an aqueous solution at a condensation reaction temperature of preferably 20 to 180°C, more preferably 30 to 170°C, even more preferably 50 to 170°C, particularly preferably 80 to 150°C.

Through controlling the temperature during the condensation reaction to fall within the range, the condensation reaction can be efficiently completed, whereby deterioration in quality and the like of the produced modified conjugated diene-based polymer because of time-dependent aging reaction of the polymers and the like can be prevented.

It should be noted that the condensation reaction time is generally about 5 minutes to 10 hours, preferably about 15 minutes to 5 hours. Through controlling the condensation reaction time to fall within the range, the condensation reaction can be smoothly completed.

It should be noted that the pressure of the reaction system during the condensation reaction is generally 0.01 to 20 MPa, preferably 0.05 to 10 MPa.

No particular limitation is imposed on the mode with which the condensation reaction is performed in an aqueous solution, and a batch-type reactor may be employed. Alternatively, the reaction may be carried out in a continuous manner by means of an apparatus such as a multi-step continuous reactor. In the course of the condensation reaction, desolvationmaybe simultaneously performed.

The primary amino group derived from the modifying agent for each of the modified conjugated diene-basedpolymer of the present invention is produced by performing a hydrolysis treatment as described above. That is, the protective group on the primary amino group is transformed into a free primary amino group by hydrolyzing the precursor capable of producing a primary amino group through hydrolysis. In addition to the above-mentioned desolation treatment involving using steam such as steam stripping, the hydrolysis treatment of the precursor capable of producing a primary amino group through hydrolysis derived from the modifying agent (that is, the deprotection treatment of the protected primary amino group) can be performed at any one of the stages commencing on a stage involving the condensation treatment and ending on a stage involving performing desolvation to provide a dry polymer as required, provided that the precursor capable of producing a primary amino group of the modified conjugated diene-based polymer may not be subjected to a hydrolysis treatment by the above-mentioned reason.

An alkoxysilane-modified butadiene-based polymer not subjected to the above-mentioned condensation reaction produces a relatively large amount of a VOC. In contrast, the alkoxysilane-modified butadiene-based polymer obtained by the condensation reaction according to the invention of the application has such good step workability as described below because the production of the volatile organic compound (VOC) can be reduced: pores are hardly produced in an extrusion step. At the same time, the polymer imposes a small load on an environment.

It should be noted that a general age resistor (for example, a phenol-based age resistor such as N-(1,3-dimethylbutyl)-N'-phenyl-p-phenylenediamine) can be loaded at any stage after the modification.

The modified conjugated diene-based polymer obtained as described above has a Mooney viscosity ($ML_{1+4}$, 100°C) of preferably 10 to 150, more preferably 15 to 100. As long as the Mooney viscosity is 10 or more, rubber physical properties typified by a fracture resistance characteristic are sufficiently obtained. As long as the Mooney viscosity is 150 or less, the workability becomes additionally good, which makes it additionally easy to knead the polymer with a compounding agent.

In addition, the unvulcanized rubber composition according to the present invention compounded with the modified conjugated diene-based polymer has a Mooney viscosity ($ML_{1+4}$, 130°C) of preferably 10 to 150, more preferably 15 to 100.

The modified conjugated diene-based polymer to be used in the rubber composition according to the present invention has a ratio (Mw) / (Mn) of a weight-average molecular weight (Mw) in terms of polystyrene to a number-average molecular weight (Mn) before the modification measured by gel permeation chromatography of preferably 1.02 to 2.0, more preferably 1.02 to 1.5.

As long as the molecular weight distribution (Mw/Mn) of the modified conjugated diene-based polymer before the modification is set to fall within the range, even when the modified polybutadiene rubber is compounded into the rubber composition, the workability of the rubber composition does not reduce, their kneading is easily performed, and the physical properties of the rubber composition can be sufficiently improved. Here, the term "before the modification" refers to the case where isolation is performed in accordance with an ordinary method before an active terminal of an unmodified conjugated diene-based polymer and a polymerization terminator or the modifying agent are caused to react with each other. In addition, theordinarymethodis, for example, asdescribed below. The unmodified conjugated diene-based polymer has only to be drawn in an amount needed for the measurement from a polymerization reaction liquid.

In addition, the modified conjugated diene-based polymer used in the rubber composition according to the present invention has a number-average molecular weight (Mn) before the modification of preferably 100,000 to 500,000, more preferably 120,000 to 300,000. Setting the number-average molecular weight of the modified conjugated diene-based polymer before the modification within the range suppresses a reduction in elastic modulus of a vulcanized product and an increase in hysteresis loss. As a result, an excellent rupture resistant characteristic is obtained. In addition, excellent kneading workability of the rubber composition containing the modified conjugated diene-based polymer is obtained.

One kind of modified conjugated diene-basedpolymer may be used in the rubber composition according to the present invention, or two or more kinds of such polymers may be used in combination. In addition, a rubber component to be used in combination with the modified conjugated diene-based polymer is, for example, a natural rubber or any other diene-based synthetic rubber. Examples of the other diene-based synthetic rubber include a styrene-butadiene copolymer (SBR), a polybutadiene (BR), a polyisoprene (IR), a styrene-isoprene copolymer (SIR), an isobutylene-isoprene rubber (IIR), a halogenated butyl rubber, an ethylene-propylene-diene terpolymer (EPDM), and a mixture thereof.

Carbon black having a nitrogen adsorption specific surface area ($N_2SA$) of 20 to 90 $m^2$/g is used as a reinforcing filler in the rubber composition according to the present invention. Examples of the carbon black include GPF, FEF, SRF, and HAF. The nitrogen adsorption specific surface area of the carbon black is preferably 25 to 90 $m^2$/g, particularly preferably 35 to 90 $m^2$/g. Such carbon black is compounded in an amount of 10 to 100 parts by mass, preferably 30 to 90 parts by mass with respect to 100 parts by mass of the rubber components. The use of the carbon black in such amount exerts large improving effects on various physical properties. Of those, the HAF and the FEF are particularly preferred because of their excellent fracture resistance characteristics and excellent low heat generating properties (low fuel consumption properties).

In ordinary cases, the low heat generating property (low fuel consumption property) of a composition containing the carbon black is improved as the nitrogen adsorption specific surface area of the carbon black reduces. However, in the case where the carbon black is used in combination with the modified conj ugated diene-based polymer according to the present invention obtained by introducing the primary amino group to the active terminal and adding the condensation-accelerating agent to the modification reaction system during and/or after the completion of the modification reaction, the following feature is obtained. As compared with the case where the unmodified conjugated diene-based polymer is used, the rubber composition according to the present invention becomes excellent in low heat generating property (low fuel consumption property) and fracture resistance characteristic as the nitrogen adsorption specific surface area reduces even when the effect of the carbon black is not taken into consideration.

The rubber composition according to the present invention is sulfur-crosslinkable, and hence sulfur is used as a vulcanizing agent. With regard to its usage, sulfur is preferably compounded in an amount of 1 to 10 parts by mass with respect to 100 parts by mass of the rubber components. This is because of the following reasons. When the amount is less than 1 part by mass, the number of crosslinks is insufficient, and hence the fracture resistance characteristic deteriorates in some cases. When the amount exceeds 10 parts by mass, the heat resistance of the composition may deteriorate. From the foregoing viewpoint, sulfur is particularly preferably compounded in an amount of 2 to 8 parts by mass.

As long as the object of the present invention is not impaired, the rubber composition according to the present invention may further contain, in accordance with needs, a variety of chemicals usually used in the rubber industry. Examples of the chemicals include a vulcanizing agent other than sulfur, a vulcanization-accelerating agent, a process oil, an age resistor, a scorch preventive, zinc white, stearic acid, a thermosetting resin, and a thermoplastic resin.

The vulcanization-accelerating agent which can be used in the present invention is not specifically restricted, and may include, for example, thiazole-based vulcanization-accelerating agents such as M (2-mercaptobenzothiazole), DM (dibenzothiazyl disulfide), and CZ (N-cyclohexyl-2-benzothiazylsulfenamide), and guanidine-based vulcanization-accelerating agents such as DPG (diphenylguanidine). The use amount thereof is preferably 0.1 to 6.0 parts by mass, more preferably 0.2 to 4.0 parts by mass with respect to 100 parts by mass of the rubber component.

Further, the process oil which can be used as a softening agent in the rubber composition according to the present invention includes, for example, a paraffin-based oil, a naphthene-based oil, and an aromatic-based oil. The aromatic-based oil is used for uses in which the tensile strength and the abrasion resistance are regarded as important, and the naphthene-based oil or the paraffin-based oil is used for uses in which the hysteresis loss and the low-temperature characteristic are regarded as important. The use amount thereof is preferably 0 to 50 parts by mass with respect to 100 parts by mass of the rubber component, and when the amount is 50 parts by mass or less, deterioration in the tensile strength and the low heat generating property (low fuel consumption property) of the vulcanized rubber is suppressed.

Further, an age resistor that can be used in the rubber composition according to the present invention is, for example, 3C(N-isopropyl-N'-phenyl-p-phenylenediamine, 6C[N-(1,3-dimethylbutyl)-N'-phenyl-p-phenylenediamine], AW(6-ethoxy-2,2,4-trimethyl-1,2-dihydroquinoline), or a high-temperature condensation product of diphenylamine and acetone. The use amount of the age resistor is preferably 0.1 to 5.0 parts by mass, more preferably 0.3 to 4.0 parts by mass with respect to 100 parts by mass of the rubber component.

(Constitution of turbulent flow-creating ridge)

Next, the constitution of a turbulent flow-creating ridge is described with reference to the drawings described in the foregoing.

As illustrated in FIGS. 3 to 6, the turbulent flow-creating ridges 10 are each such that a sectional shape cut out in a direction A perpendicular to the direction in which the ridge extends is a left-right symmetrical shape. The turbulent flow-creating ridges 10 each have an edge portion 10E when viewed in a section in the radial direction. In addition, the turbulent flow-creating ridges 10 each have an edge portion 10F when viewed in a section in the circumferential direction. It is important that a front wall angle $\theta$ 1 of each of front wall surfaces 10a of the turbulent flow-creating ridges 10 on which an air flow impinges with respect to the outside surface 3a as the tire surface is set to fall within the range of 70° to 110°. It should be noted that the figures illustrate turbulent flow-creating ridges each having a quadrangular sectional shape and a front wall angle of 90°.

A rear wall angle θ2 of each of rear wall surfaces 10b of the turbulent flow-creating ridges 10 with respect to the outside surface 3a is preferably set so as to be equal to the front wall angle θ 1 because the sectional shape of each of the ridges cut out in the direction A perpendicular to its extending direction has left-right symmetry.

It is preferred that a lower side width w of each of the turbulent flow-creating ridges 10 in the direction A perpendicular to the extending direction be set to fall within the range of 0.5 mm to 5 mm. When the height of each of the turbulent flow-creating ridges 10 (the term "height" means the highest height and the same holds true for the following) is represented by h.

In addition, the turbulent flow-creating ridges 10 are preferably set as sites for causing a turbulent flow to flow through failed sites, the ridges having such dimensions that when the height, pitch, and lower side width of each of the ridges are represented by h, p, and w, respectively, the relationships of $1.0 \leq p/h \leq 50.0$ and $1.0 \leq (p-w)/w \leq 100.0$ are satisfied. A value for the p/h preferably falls within the range of $2.0 \leq p/h \leq 24.0$, more preferably falls within the range of $10.0 \leq p/h \leq 20.0$. A value for the (p-w)/w more preferably falls within the range of $4.0 \leq (p-w)/w \leq 39.0$. In addition, the ridge height h preferably falls within the range of $0.5 \text{ mm} \leq h \leq 7 \text{ mm}$, and the lower side width w preferably falls within the range of $0.3 \text{ mm} \leq w \leq 4 \text{ mm}$.

Setting the ranges of those parameters to the above-mentioned ranges exerts a high improving effect on heat transfer efficiency.

This is because of the following reason. When the range of the p/h is specified as described above, the vertical turbulent flow state of the air flow can be roughly coordinated with the p/h. In the case where the pitch p is excessively narrow, the air flow does not impinge as a downward flow on the tire surface between the turbulent flow-creating ridges. In addition, the case where the pitch p is excessively wide is identical to the case where there are no turbulent flow-creating ridges.

In addition, the (p-w)/w represents a ratio of the width w of each of the turbulent flow-creating ridges to the pitch p. The case where the ratio is excessively small is identical to the case where a ratio of the surface areas of the turbulent flow-creating ridges to the area of a surface where one wishes to improve heat radiation is one. The minimum value for the (p-w)/w is specified as 1.0 because the turbulent flow-creating ridges are each formed of rubber and hence a heat radiation-improving effect cannot be expected from an increase in their surface areas.

Further, a tilt angle θ of each turbulent flow-creating ridge with respect to the radial direction of the tire preferably falls within the range of $-70° \leq \theta \leq 70°$ (see FIG. 3). When the range of the θ is specified as described above, an air flow relatively created by the rotating tire impinges on the surface of each turbulent flow-creating ridge in the circumferential direction with reliability, and hence the above-mentioned heat-radiating effect by a turbulent flow canbe expected. The tilt angle θ more preferably falls within the range of $-30° \leq \theta \leq 30°$.


(Action of turbulent flow-creating ridge)

When the run-flat tire 1 rotates in the above-mentioned constitution, as illustrated in FIGS. 4 and 5, an air flow a that flows substantially along the circumferential direction of the tire is relatively created over the outside surface 3a of the tire side portion 3, and the air flow a is turned into a turbulent flow by the turbulent flow-creating ridges 10 to flow over the outside surface 3a so that active heat exchange with the outside surface 3a may be performed.

The flowof the turbulent flow flowing over the outer peripheral surface 3a is described in detail. The air flow a turns into a vertical turbulent flow al that ascends at the position of each turbulent flow-creating ridge 10 and descends at a position where the turbulent flow-creating ridge 10 is absent. Here, as illustrated in FIG. 6, when the front wall angle θ 1 of each turbulent flow-creating ridge 10 is less than 70°, the vertical turbulent flow al is trapped in a recessed portion and the amount of a flow to be lifted upward is small. As a result, a separation angle β of the flow with respect to the turbulent flow-creating ridge 10 becomes small, and hence only a moderate downward flow is created on the downstream side of the turbulent flow-creating ridge 10. In addition, when the front wall angle θ1 of each turbulent flow-creating ridge 10 exceeds 110°, the separation angle β of the vertical turbulent flow al with respect to the turbulent flow-creating ridge 10 and its flow velocity become small. In addition, the flowvelocity of the flow to be lifted upward becomes slow, and hence vertical heat exchange cannot be promoted. Therefore, effective heat exchange with the outside surface 3a cannot be promoted.

In contrast, when the front wall angle θ1 of each turbulent flow-creating ridge 10 falls within the range of 70° to 110°, the separation angle β of the vertical turbulent flow al with respect to the turbulent flow-creating ridge 10 is somewhat large, and hence the flow returns as a vigorous downward flow on the downstream side of the turbulent flow-creating ridge 10 to impinge on the outside surface 3a. As a result, active heat exchange with the outside surface 3a is performed. As can be seen from the foregoing, a reduction in tire temperature can be achieved with the turbulent flow-creating ridges 10 provided for the outside surface 3a with reliability, and the durability of the tire can be improved.

In this embodiment, the lower side width w of each turbulent flow-creating ridge 10 in the direction A perpendicular to its extending direction is set to fall within the range of 0.5 mm to 5 mm. When the lower side width w of the turbulent flow-creating ridge 10 is less than 0.5 mm, the turbulent flow-creating ridge 10 has so weak a strength as to vibrate owing to the air flow. In addition, when the lower side width w of the turbulent flow-creating ridge 10 exceeds 5 mm, the quantity of heat accumulated in the turbulent flow-creating ridge 10 becomes excessively large. In view of the foregoing, setting the lower side width w of the turbulent flow-creating ridge 10 within the range of 0.5 mm to 5 mm can improve a heat-radiating characteristic while preventing a demerit caused by providing the tire side portion 3 with the turbulent flow-creating ridges 10 to the extent possible.

When the height h of the turbulent flow-creating ridge 10 is changed in accordance with the tire size, the turbulent flow-creating ridge 10 can be caused to exert a predetermined heat-radiating characteristic in the run-flat tire 1 of any tire size.

In order that each turbulent flow-creating ridge 10 may be caused to exert a sufficient heat-radiating effect, it is important that the turbulent flow-creating ridge 10 has a ridge height comparable to the thickness of a velocity boundary layer (layer having a slow velocity on a wall surface) at the place where the ridge is placed. In this case, a sufficient fluid-mixing action is exerted. When a certain velocity is supposed, the thickness of the velocity boundary layer is specified by the square root of the tire radius. Accordingly, a ratio between the square root and the ridge height can be an indicator of the heat-radiating effect.

In this embodiment, the sectional shape of each turbulent flow-creating ridge 10 cut out in the direction A perpendicular to its extending direction is a left-right symmetrical shape. Therefore, the turbulent flow-creating ridge 10 is such that left and right distances from the central position in the sectional shape cut out in the direction A perpendicular to the extending direction to the surface of the turbulent flow-creating ridge 10 become uniform. Accordingly, the heat accumulation in the turbulent flow-creating ridge 10 can be reduced to the extent possible.

In this embodiment, when the height, pitch, and lower side width of each turbulent flow-creating ridge 10 are represented by h, p, and w, respectively, the h, the p, and the w are set to satisfy the relationships of $1.0 \leq p/h \leq 50.0$ and $1.0 \leq (p-w)/w \leq 100.0$. This is because of the following reason. When the range of the p/h is specified as described above, the turbulent flow state of the air flow can be roughly coordinated with the p/h. In the case where the pitch p is excessively narrow, the air flow does not impinge as a downward flow on the outside surface 3a between the turbulent flow-creating ridges 10. In addition, the case where the pitch p is excessively wide is identical to the case where the turbulent flow-creating ridges 10 are absent.

In addition, the (p-w)/w represents a ratio of the lower side width w of each turbulent flow-creating ridge 10 to the pitch p. The case where the ratio is excessively small is identical to the case where a ratio of the surface areas of the turbulent flow-creating ridges 10 to the area of a surface where one wishes to improve heat radiation is one. The minimum value for the (p-w) /w is specified as 1.0 because the turbulent flow-creating ridges 10 are each formed of rubber and hence a heat radiation-improving effect cannot be expected from an increase in their surface areas.

In this embodiment, the tilt angle θ of each turbulent flow-creating ridge 10 with respect to the radial direction r of the tire falls within the range of $-70° \leq \theta \leq 70°$. When the range of the 0 is specified as described above, the air flow a relatively created by the rotating tire impinges on the surface of each turbulent flow-creating ridge 10 in the circumferential direction of the tire with reliability, and hence the above-mentioned heat-radiating effect by a turbulent flow can be expected.

In this embodiment, the present invention is applied to the run-flat tire 1 in which the tire side portion 3 is provided with the side-reinforcing layer 8 using the rubber composition containing the modified conjugated diene-based polymer described above and the turbulent flow-creating ridges. The side-reinforcing layer 8 enables run-flat running, and the run-flat tire to which both the layer and the ridges are applied can reduce an increase in the temperature of a failure core at the time of the running to the extent possible.

In particular, in this embodiment, the turbulent flow-creating ridges 10 each have the edge portion 10E when viewed in the section in the radial direction. Accordingly, a separating action is exerted on an air flow that flows in association with the rotation of the run-flat tire 1 from an inner diameter side to an outer diameter side with the aide of a centrifugal force. Then, the separated air flow turns into a downward flow to impinge on the tire side portion 3, thereby promoting heat exchange. In addition, the turbulent flow-creating ridges 10 each have the edge portion 10F when viewed in a section in the circumferential direction. Accordingly, when the air flow surmounts each turbulent flow-creating ridge 10 in association with the rotation of the run-flat tire 1, the air flow is easily separated from the tire side portion 3. As a result, the air flow that has once been separated from the tire side portion 3 turns into a turbulent flow that abruptly descends by virtue of a negative pressure generated on the rear side (downstream side) of the turbulent flow-creating ridge 10 in the rotation direction of the tire to impinge on the tire side portion 3, the turbulent flow having a promoting action on heat exchange with the tire side portion 3.

(Modified examples of turbulent flow-creating ridges)

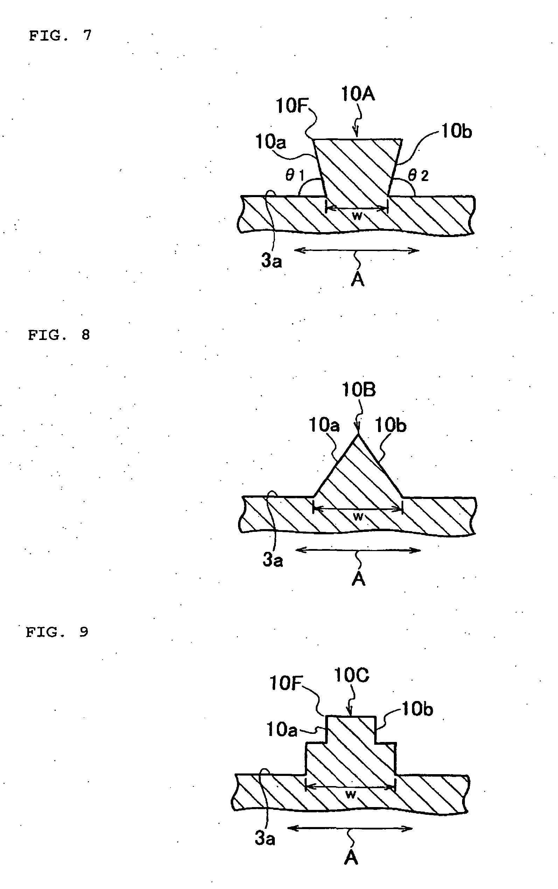

Next, various modified examples of the turbulent flow-creating ridges are described with reference to FIGS. 7 to 10. FIG. 7 illustrates a turbulent flow-creating ridge 10A as a first modified example. The sectional shape of the turbulent flow-creating ridge 10A cut out in the direction A perpendicular to its extending direction is a reverse trapezoidal shape, and both the front wall angle 0 1 and the rear wall angle θ2 are angles of less than 90°.

In contrast, when the turbulent flow-creating ridge 10A is formed into a trapezoidal shape by making both the front wall angle θ1 and the rear wall angle θ 2 angles in excess of 90°, the occurrence of a crack due to the deterioration of a corner portion of the turbulent flow-creating ridge 10A can be prevented to the extent possible.

FIG. 8 illustrates a turbulent flow-creating ridge 10B as a second modified example. The sectional shape of the turbulent flow-creating ridge 10B cut out in the direction A perpendicular to its extending direction is a triangular shape. When the turbulent flow-creating ridge 10B is formed into a triangular shape, as compared with the case where the ridge is formed into a quadrangular shape, a rubber usage can be curtailed while the rigidity of the turbulent flow-creating ridge 10B is maintained by securing the dimension of the lower side width w.

FIG. 9 illustrates a turbulent flow-creating ridge 10C as a third modified example. The sectional shape of the turbulent flow-creating ridge 10C cut out in the direction A perpendicular to its extending direction is a stepped shape. When the turbulent flow-creating ridge 10C is provided with steps, as compared with the case where the ridge is formed into a quadrangular shape, a rubber usage can be curtailed while the rigidity of the turbulent flow-creating ridge 10C is maintained by securing the dimension of the lower side width w.

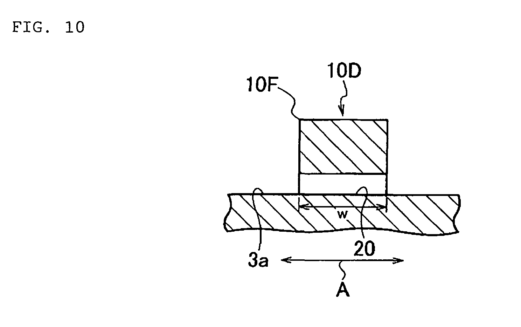

FIG. 10 illustrates a turbulent flow-creating ridge 10D as a fourth modified example. The sectional shape of the turbulent flow-creating ridge 10D cut out in the direction A perpendicular to its extending direction is a rectangular shape, and the ridge has a through-hole 20 in the directionAperpendicular to the extending direction. When the turbulent flow-creating ridge 10D is provided with the through-hole 20, an air flow flows into the through-hole 20, and hence heat in the turbulent flow-creating ridge 10D can be radiated. Therefore, heat accumulation in the turbulent flow-creating ridge 10D can be reduced to the extent possible.

(Other embodiments)

Although the turbulent flow-creating ridges 10 are provided over the entire circumference of the tire side portion 3 in the embodiment, the turbulent flow-creating ridges 10 may be provided only for a partial region of the tire side portion 3.

Although the turbulent flow-creating ridges 10 are provided at an equal interval in the tire circumferential direction of the tire side portion 3 in the embodiment, the turbulent flow-creating ridges 10 may be provided at nonuniform intervals in the tire circumferential direction.

In addition, the angles of the directions of the turbulent flow-creating ridges 10 formed with respect to the radial direction may be constant, but the flow velocity of an air flow varies depending on the position of a ridge in the radial direction in a rotating pneumatic tire. Accordingly, the angles of the directions of the turbulent flow-creating ridges 10 formed with respect to the radial direction may vary for the purpose of improving heat radiation.

In addition, the direction inwhich the turbulent flow-creating ridges 10 each extend is not limited to a continuous one with respect to the radial direction, and may be discontinuous. When the direction is made discontinuous, a part of the tire side portion where heat radiation deteriorates is curtailed, and hence an average heat transfer coefficient can be improved.

In addition, the turbulent flow-creating ridges 10 each preferably have an apex at least inside the radial direction. This is because of the following reason. The formed apex separates an air flow to create a turbulent flow that flows away to the outside in the radial direction of the tire in a whirling fashion while receiving an action of a centrifugal force, and hence an additional improving effect on the heat radiation of the tire side portion is exerted.

Although the turbulent flow-creating ridges 10 are provided for the outside surface 3a of the tire side portion 3 in the embodiment, the ridges may be provided for the inside surface as the surface of the tire side portion 3.

Although an example in which the present invention is applied to the run-flat tire 1 is described in the embodiment, the present invention can be applied to a pneumatic tire except the run-flat tire 1, specifically, an off-the-road radial (ORR) tire, a truck/bus radial (TBR) tire, or the like as a matter of course. When the present invention is applied to a tire for a heavy load, a reduction in the temperature of a ply end or the like as a failure core can be achieved, and hence an improvement in the durability of the tire for a heavy load can be achieved.

(Run-flat tire)

The rubber composition according to the present invention is obtained by kneading according to the compounding formulation with a kneading machine such as a Banbury mixer, a roll, or an internal mixer. The composition is subjected to molding, and is then vulcanized. The resultant is used as a side-reinforcing layer 8 for a tire in FIG. 1.

The tire of the present invention has turbulent flow-creating ridges and is produced according to an ordinary method of producing a run-flat tire by using the rubber composition according to the present invention in the side-reinforcing layer 8. That is, the rubber composition according to the present invention in which various chemicals are incorporated as described above is processed into each member at its unvulcanized stage, and is then applied and molded on a tire molding machine by an ordinary method. As a result, a green tire is formed. The green tire is heated and pressurized in a vulcanizer. Thus, the tire is obtained.

The tire of the present invention thus obtained is excellent in both durability at the time of run-flat running and rolling resistance at the time of normal running.

Examples

Next, the present invention is described in further detail with reference to examples. However, the present invention is by no means limited by these examples.

It shouldbe noted that the physical properties of an unmodified or modified conjugated diene-based polymer, carbon black, and an unvulcanized rubber composition, and the run-flat durability and rolling resistance of a tire were measured in accordance with the following methods.

<<Physical properties of unmodified or modified conjugated diene-based polymer>>

<Measurement of number-average molecular weight (Mn), weight-average molecular weight (Mw), and molecular weight distribution (Mw/Mn)>

The measurement was performed by GPC [manufactured by TOSOH CORPORATION, HLC-8220] with a refractometer as a detector, and the results were represented in terms of polystyrene with monodisperse polystyrene as a standard. It should be noted that a column was a GMHXL [manufactured by TOSOH CORPORATION] and an eluent was tetrahydrofuran.

<Volatilization volume of volatile organic compound (VOC)>

A sample was treated with a siloxane hydrolysis reagent formed of 0.2N toluenesulfonic acid and 0.24N water in a solvent formed of 15% of n-butanol and 85% of toluene, and then the stoichiometric amount of ethanol from [EtOSi] remaining in a modified conjugated diene (co)polymer under test was measured by head-space gas chromatography.

<Measurement of primary amino group content (mmol/kg) >

First, a polymer was dissolved in toluene, and was then precipitated in a large amount of methanol so that an amino group-containing compound not bonded to the polymer was isolated from the rubber. After that, the remainder was dried. The total amino group content of the polymer subjected to this treatment as a sample was determined by a "total amine value test method" described in JIS K 7237. Subsequently, the secondary amino group and tertiary amino group contents of the polymer subjected to the treatment as a sample were determined by an "acetylacetone blocked method." o-Nitrotoluene was used as a solvent for dissolving the sample. Acetylacetone was added to the resultant solution, and then the mixture was subjected to potentiometric titration with a solution of perchloric acid in acetic acid. A primary amino group content (mmol) was determined by subtracting the secondary amino group and tertiary amino group contents from the total amino group content, and was then divided by the mass of the polymer used in the analysis. Thus, the content (mmol/kg) of a primary amino group bonded to the polymer was determined.

<<Physical property of carbon black>>

<Nitrogen adsorption specific surface area>

Measurement was performed in conformity with JISK6217-2:2001.

<<Physical property of unvulcanized rubber composition>>

<Mooney viscosity>

Mooney viscosity was measured in conformity with JIS K 6300-1:2001 under the $ML_{1+4}$ condition at 130°C.

<<Evaluations of tire>>

<Run-flat durability>

| Each tire under test: | A tire size of 285/50R20 |
|---|---|
| Rim used: | 6JJ×20 |
| Internal pressure: | 0 kPa |
| Load: | 9.8 kN |
| Velocity: | 90 km/h |

An endurance distance by the time of a failure in an endurance drum test was represented as an index. Run-flat durability is better as the index increases.

$$\text{Run-flat durability (index)} = (\text{travel distance of tire under}$$
$$\text{test/travel distance of tire of Comparative Example 1}) \times 100$$

<Rolling resistance>

The rolling resistance of a pneumatic radial tire was measured in conformity with SAE J2452, and was then represented as an index according to the following equation by setting the rolling resistance of the tire of Comparative Example 1 or 7 to 100. A smaller index means that the rolling resistance is smaller and the tire is better.

$$\text{Rolling resistance (index)} = (\text{rolling resistance of tire under}$$
$$\text{test/rolling resistance of tire of Comparative Example 1}) \times 100$$

Production Example 1: production of polymer A

Under nitrogen, 1.4 kg of cyclohexane, 250 g of 1, 3-butadiene, and a solution of 2,2-ditetrahydrofurylpropane (0.0285 mmol) in cyclohexane were poured into a 5-L autoclave replaced with nitrogen, and then 2.85 mmol of n-butyllithium (BuLi) were added to the mixture. After that, polymerization was performed in a 50°C hot water bath equipped with a stirring apparatus for 4.5 hours. The reaction conversion degree of 1,3-butadiene was nearly 100%. A methanol solution containing 1.3 g of 2,6-di-tert-butyl-p-cresol was added to the polymer solution to terminate the polymerization. After that, desolvation was performed by steam stripping, and then the remainder was dried with a roll at 110°C. Thus, a polymer A (conjugated diene-based polymer) was obtained. The molecular weight (Mw) and molecular weight distribution (Mw/Mn) of the polymer taken out before the termination of the polymerization of the resultant polymer A were measured. Tables 1 and 2 show the results.

Production Example 2: production of modified polymer B

The production of a polymer before modification was performed in the same manner as in the polymer A. Subsequently, the temperature of the polymer solution was kept at 50°C while the polymerization catalyst was prevented from deactivating, and then 1,129 mg of N,N-bis(trimethylsilyl)aminopropylmethyldiethoxysilane having a precursor capable of producing a primary amino group through hydrolysis were added to the solution so that a modification reaction was performed for 15 minutes. No condensation-accelerating agent was added. Finally, 2,6-di-tert-butyl-p-cresol was added to the polymer solution after the reaction. Next, desolvation by steam stripping and the hydrolysis of the precursor capable of producing a primary amino group were performed, and then the rubber was dried with a heated roll with its temperature adjusted to 110°C. Thus, a polymer B (conjugated diene-based polymer) was obtained. The molecular weight (Mw) and molecular weight distribution (Mw/Mn) of the resultant modified polymer B before the modification, and the primary amino group content of the modified polymer B were measured. Tables 1 and 2 show the results.

Production Example 3: production of modified polymer C

The production of a polymer before modification was performed in the same manner as in the polymer A. Subsequently, the temperature of the polymer solution was kept at 50°C while the polymerization catalyst was prevented from deactivating, and then 1,129 mg of N,N-bis(trimethylsilyl)aminopropylmethyldiethoxysilane having a precursor capable of producing a primary amino group through hydrolysis were added to the solution so that a modification reaction was performed for 15 minutes. After that, 8.11 g of tetrakis(2-ethyl-1,3-hexanediolato)titanium as a condensation-accelerating agent were added to the resultant, and then the mixture was stirred for an additional fifteen minutes. Finally, 2,6-di-tert-butyl-p-cresol was added to the polymer solution after the reaction. Next, desolvation by steam stripping and the hydrolysis of the precursor capable of producing a primary amino group were performed, and then the rubber was dried with a heated roll with its temperature adjusted to 110°C. Thus, a polymer C (conjugated diene-based polymer) was obtained. The molecular weight (Mw) and molecular weight distribution (Mw/Mn) of the resultant modified polymer C before the modification, and the primary amino group content of the modified polymer C were measured. Tables 1 and 2 show the results.

Production Example 4: production of modified polymer D

3. Kilograms of cyclohexane, 500 g of a butadiene monomer, and 0.2 mmol of ditetrahydrofurylpropane (DTHFP) were poured into an 8-L pressure-resistant reactor with a temperature-adjustable jacket dried and replaced with nitrogen, and then 4 mmol of n-butyllithium (BuLi) were added to the mixture. After that, polymerization was performed at a starting temperature of 40°C for 1 hour. The polymerization was performed under a temperature increase condition and the temperature of the jacket was adjusted lest the final temperature should exceed 75°C. During a time period commencing on the initiation of the polymerization and ending on its completion, the polymerization system showed no precipitate and was uniformly transparent. A polymerization conversion degree was nearly 100%. After 0.8 mL of tin tetrachloride (1-mol/L cyclohexane solution) had been added as a terminal modifying agent to the polymerization system, a modification reaction was performed for 30 minutes. After that, 0.5 mL of a 5-mass% solution of 2,6-di-t-butyl-p-cresol in isopropanol was added to the polymerization system to terminate the polymerization, and then the polymer was dried in accordance with an ordinary method. Thus, a modified polymer D was obtained. The molecular weight (Mw) and molecular weight distribution (Mw/Mn) of the resultant modified polymer D before the modification were measured. Tables 1 and 2 show the results.

Production Example 5: production of modified polymer E

A modified polymer E was produced by such solution mixing that a mass ratio (modified polymer C/modified polymer D) of the modified polymer C obtained in Production Example 3 to the modified polymer D obtained in Production Example 4 was 7/3. The primary amino group content of the resultant modified polymer E was measured. Table 1 shows the result.

Production Example 6: synthesis of N,N-bis(trimethylsilyl)aminopropylmethyldiethoxysilane

Under a nitrogen atmosphere, 36 g of 3-aminopropylmethyldiethoxysilane (manufactured by Gelest, Inc.) serving as an aminosilane moiety were added to 400 ml of a dichloromethane solvent in a glass flask equipped with a stirrer. After that, 48 ml of trimethylsilane chloride (manufactured by Sigma-Aldrich, Inc) and 53 ml of triethylamine each serving as a protective moiety were further added to the solution, and then the mixture was stirred at room temperature for 17 hours. After that, the reaction solution was evaporated with an evaporator so that the solvent was removed. Thus, a reaction mixture was obtained. Further, the resultant reaction mixture was distilled under reduced pressure under the condition of 5 mm/Hg. Thus, 40 g of N,N-bis(trimethylsilyl)aminopropylmethyldiethoxysilane were obtained as a 130 to 135°C fraction. N,N-Bis(trimethylsilyl)aminopropylmethyldiethoxysilane thus obtained was used in each of Production Examples 2 and 3 (production of the modified polymers B and C).

Examples 1 and 2, and Comparative Examples 1 to 3

Five kinds of rubber compositions were prepared with the unmodified polybutadiene rubber A obtained in Production Example 1 and the modified polybutadiene rubbers B to E obtained in Production Examples 2 to 5 in accordance with the compounding formulations shown in Table 1. The Mooney viscosities of those five kinds of unvulcanized rubber compositions were measured. Table 1 shows the results.

Next, run-flat tires each having a tire size of 285/50R20 were each produced in accordance with an ordinary method by compounding any one of those five kinds of rubber compositions into the side-reinforcing layer 8 illustrated in FIG. 1. Then, those five kinds of tires were each evaluated for its run-flat durability and rolling resistance. Table 1 shows the results.

It should be noted that the following values were used for the above-mentioned parameters: 2 mm for the w, 90° for the $\theta 1$, 12 for the (p/h), and 5 for the [(p-w)/w].

16

[Table 1]

Table 1

| | | Comparative Example 1 | Comparative Example 2 | Example 1 | Example 2 | Comparative Example 3 |
|---|---|---|---|---|---|---|
| Kinds A to E of polymers (polybutadienes) of Production Examples | | A | B | C | E | D |
| Nitrogen adsorption specific surface area of carbon black ($N_2SA$) ($m^2$/g) | | 77 | 77 | 77 | 77 | 77 |
| Compounding composition | Polymer (polybutadiene)*1 | 60 | 60 | 60 | 60 | 60 |
| | Natural rubber | 40 | 40 | 40 | 40 | 40 |
| | Carbon black*2 | 55 | 55 | 55 | 55 | 55 |
| Part(s) by mass | Softening agent*3 | 5 | 5 | 5 | 5 | 5 |
| | Zinc white | 4.5 | 4.5 | 4.5 | 4.5 | 4.5 |
| | Stearic acid | 1 | 1 | 1 | 1 | 1 |
| | Age resistor 6C*4 | 2 | 2 | 2 | 2 | 2 |
| | Vulcanization-accelerating agent CZ*5 | 2.5 | 2.5 | 2.5 | 2.5 | 2.5 |
| | Sulfur | 3 | 3 | 3 | 3 | 3 |
| Primary amino group content (mmol/kg) | | - | 4.0 | 4.0 | 2.8 | - |
| Molecular weight distribution of polybutadiene (Mw/Mn) | | 1.1 | 1.2 | 2.0 | - | 1.8 |
| Number-average molecular weight of polybutadiene ($Mn \times 10^{-3}$) | | 150 | 150 | 150 | - | 361 |
| Volatilization volume of volatile organic compound (VOC) (mmol/kg) | | 0 | 7.9 | 4.3 | 1.3 | 0 |
| Mooney viscosity of unvulcanized rubber composition (ML1+4, 130°C) | | 63 | 65 | 72 | 70 | 66 |
| Results of evaluations of tire | Run-flat durability (index) | 100 | 103 | 120 | 117 | 102 |
| | Rolling resistance (index) | 100 | 98 | 92 | 94 | 99.5 |

[Notes]
*1. Polymer (polybutadiene): the polybutadiene rubber A obtained in Production Example 1 and the modified polybutadiene rubbers B to E obtained in Production Examples 2 to 5 were used.
*2. Carbon black: HAF {$N_2SA$ ($m^2$/g) =77 ($m^2$/g)}, trademark "Asahi #70," manufactured by ASAHI CARBON CO., LTD.
*3. Softening agent: aromatic oil, trademark "Aromax #3," manufactured by FUJI KOSAN COMPANY, LTD.
*4. Age resistor 6C: N-(1,3-dimethylbutyl)-N'-phenyl-p-phenylenediamine, trademark "OZONONE 6C," manufactured by Seiko Chemical Co., Ltd.
*5. Vulcanization-accelerating agent CZ: N-cyclohexyl-2-benzothiazylsulfenamide, trademark "Nocceler CZ," manufactured by OUCHI SHINKO CHEMICAL INDUSTRIAL CO., LTD.

Examples 3 to 6 and Comparative Examples 4 to 14

Fifteen kinds of rubber compositions were prepared with the unmodified polybutadiene rubber A obtained in Production Example 1 and the modified polybutadiene rubbers B to E obtained in Production Examples 2 to 5 in accordance with the compounding formulations shown in Table 2. The Mooney viscosities of those fifteen kinds of unvulcanized rubber compositions were measured. Table 2 shows the results.

Next, run-flat tires each having a tire size of 285/50R20 were each produced in accordance with an ordinary method by compounding any one of those fifteen kinds of rubber compositions into the side-reinforcing layer 8 illustrated in FIG. 1. Then, those fifteen kinds of tires were each evaluated for its run-flat durability and rolling resistance. Table 2 shows the results.

[Notes]

*1. Polymer (polybutadiene): the polybutadiene rubber A obtained in Production Example 1 and the modified polybutadiene rubbers B to E obtained in Production Examples 2 to 5 were used.

*2. Carbon black: FEF {$N_2SA$ ($m^2/g$)=40 ($m^2/g$)}, trademark "Asahi #60," manufactured by ASAHI CARBON CO., LTD.

*3. Carbon black: HAF {$N_2SA$ ($m^2/g$)=77 ($m^2/g$)}, trademark "Asahi #70," manufactured by ASAHI CARBON CO., LTD.

*4. Carbon black: ISAF {$N_2SA$ ($m^2/g$)=115($m^2/g$)}, trademark "Asahi #80," manufactured by ASAHI CARBON CO., LTD.

*5. Softening agent: aromatic oil, trademark "Aromax #3," manufactured by FUJI KOSAN COMPANY, LTD.

*6. Age resistor 6C: N-(1,3-dimethylbutyl)-N'-phenyl-p-phenylenediamine, trademark "OZONONE 6C," manufactured by Seiko Chemical Co., Ltd.

*7. Vulcanization-accelerating agent CZ: N-cyclohexyl-2-benzothiazylsulfenamide, trademark "Nocceler CZ," manufactured by OUCHI SHINKO CHEMICAL INDUSTRIAL CO., LTD.

As is apparent from Tables 1 and 2, the tires of Examples 1 to 6 each serving as the present invention each had run-flat durability and rolling resistance dramatically improved as compared with those of each of the tires of Comparative Examples 1 to 14 as a result of: the introduction of a primary amino group to an active terminal of a conjugated diene-based polymer to be used and the addition of a condensation-accelerating agent to a modification reaction system during and/or after the completion of a modification reaction; and a combination with carbon black having a small nitrogen adsorption specific surface area.

Further, it is apparent that the modified polymer C obtained in Production Example 3 of Table 1 (see Example 1) not only has good step workability but also imposes a small load on an environment because the polymer has a smaller volatilization volume of the VOC than that of the modified polymer B obtained in Production Example 2 (see Comparative Example 2).

Examples 7 to 9 and Comparative Example 15 to Comparative Example 17

In each of the examples and the comparative examples, an endurance drum test was performed under the above-mentioned conditions. As shown in Table 3, Comparative Example 15 is a tire provided with no turbulent flow-creating ridge, and Comparative Examples 16 and 17, and Examples 7 to 9 are such that turbulent flow-creating ridges each having the same constitution as that of the above-mentioned embodiment are provided and their front wall angles are changed. It should be noted that Table 3 shows the result of the endurance drum test (durability evaluation) obtained by representing an endurance distance by the time of the occurrence of a failure as an index.

It should be noted that a run-flat tire having a tire size of 285/50R20 was used, a product of the compounding formulation described in Example 1 as a rubber composition having low rolling property, which was obtained by introducing a primary amino group to an active terminal of a conjugated diene-based polymer and adding a condensation-accelerating agent to a modification reaction system during and/or after the completion of a modification reaction, was used as a rubber to be compounded into the side-reinforcing layer 8 in each of the examples , and a product of the compounding formulation described in Comparative Example 1 was used as the rubber in each of the comparative examples.

[Table 3]

Table 3

| Parameter | Comparative Example 15 | Comparative Example 16 | Comparative Example 17 | Example 7 | Example 8 | Example 9 |
|---|---|---|---|---|---|---|
| w (mm) | - | 2 | 2 | 2 | 2 | 2 |
| $\theta 1$ (°) | - | 60 | 120 | 70 | 90 | 110 |
| p/h | - | 12 | 12 | 12 | 12 | 12 |
| (p-w)/w | - | 5 | 5 | 5 | 5 | 5 |
| $h/r^{1/2}$ | - | 0.0033 | 0.0033 | 0.0033 | 0.0033 | 0.0033 |
| Run-flat durability | 100 | 105 | 103 | 138 | 150 | 140 |

Examples 10 to 12, and Comparative Examples 15, 18, and 19

As shown in Table 4, Comparative Example 15 is a tire provided with no turbulent flow-creating ridge, and Comparative Examples 19 to 21 and Examples 10 to 12 are such that turbulent flow-creating ridges each having the same constitution as that of the above-mentioned embodiment are provided and their values for the (p-w) /w are changed. It should be noted that Table 4 shows the result of the endurance drum test (durability evaluation) obtained by representing an endurance distance by the time of the occurrence of a failure as an index.

It should be noted that a run-flat tire having a tire size of 285/50R20 was used, a product of the compounding formulation described in Example 1 as a rubber composition having low rolling property, which was obtained by introducing a primary amino group to an active terminal of a conjugated diene-based polymer and adding a condensation-accelerating agent to a modification reaction system during and/or after the completion of a modification reaction, was used as a rubber to be compounded into the side-reinforcing layer 8 in each of the examples, and a product of the compounding formulation described in Comparative Example 1 was used as the rubber in each of the comparative examples.

[Table 4]

Table 4

| Parameter | Comparative Example 15 | Comparative Example 18 | Comparative Example 19 | Example 10 | Example 11 | Example 12 |
|---|---|---|---|---|---|---|
| w (mm) | - | 2 | 2 | 2 | 2 | 2 |
| $\theta 1$ (°) | - | 90 | 90 | 90 | 90 | 90 |
| p/h | - | 12 | 12 | 12 | 12 | 12 |

(continued)

| Parameter | Comparative Example 15 | Comparative Example 18 | Comparative Example 19 | Example 10 | Example 11 | Example 12 |
|---|---|---|---|---|---|---|
| (p-w)/w | - | 1.2 | 89 | 3.6 | 5 | 71 |
| | | | | | | |
| Run-flat durability | 100 | 100 | 101 | 125 | 150 | 130 |

Industrial Applicability

According to the present invention, efficient heat radiation is performed by providing a side surface with turbulent flow-creating ridges, and as a result, a reduction in temperature inside a tire side portion is achieved with reliability and durability is improved. Further, there can be provided such a tire that the heat generation of a side-reinforcing rubber is suppressed by using a rubber composition having low rolling resistance in the side-reinforcing rubber, a tire temperature can be significantly reduced by a combination of the use with the above-mentioned turbulent flow-creating ridges, and durability at the time of run-flat running and low rolling resistance at the time of normal running can be simultaneously improved.

Reference Signs List

1 run-flat tire (tire)
3 tire side portion
3a outside surface (tire surface)
8 side-reinforcing layer
10, 10A to 10D turbulent flow-creating ridge
10a front wall surface

**Claims**

1. A pneumatic tire, comprising turbulent flow-creating ridges extending from an inner circumference side to an outer circumference side, the turbulent flow-creating ridges being provided for a tire surface of a tire side portion at intervals in a circumferential direction of the tire, wherein:

   the turbulent flow-creating ridges each have an edge portion when viewed in a section in a radial direction, and front wall surfaces thereof on which an air flow impinges each form a front wall angle in a range of 70° to 110° with respect to the tire surface; and
   a rubber composition obtained by compounding 100 parts by mass of rubber components containing 10 mass% or more of a modified conjugated diene-based polymer, which is obtained by introducing a primary amino group or a precursor capable of producing a primary amino group through hydrolysis to a terminal of a conjugated diene-based polymer through a modification reaction between the terminal and an alkoxysilane compound having the primary amino group or the precursor capable of producing a primary amino group through hydrolysis, and adding a condensation-accelerating agent to the modification reaction system during and/or after completion of the modification reaction, with 10 to 100 parts by mass of carbon black having a nitrogen adsorption specific surface area of 20 to 90 $m^2$/g is used in a side-reinforcing rubber for constituting the tire side portion.

2. The tire according to claim 1, wherein the conjugated diene-based polymer is obtained by anionic polymerization of a conjugated diene compound alone or the conjugated diene compound and an aromatic vinyl compound in an organic solvent with an alkali metal compound as an initiator.

3. The tire according to claim 1 or 2, wherein the alkoxysilane compound having a precursor capable of producing a primary amino group through hydrolysis comprises N,N-bis(trimethylsilyl)aminopropylmethyldimethoxysilane, 1-trimethylsilyl-2,2-dimethoxy-1-aza-2-silacyclopentane, N,N-bis(trimethylsilyl)aminopropyltrimethoxysilane, N,N-bis(trimethylsilyl)aminopropyltriethoxysilane, N,N-bis(trimethylsilyl)aminopropylmethyldiethoxysilane, N,N-bis(trimethylsilyl)aminoethyltrimethoxysilane, N,N-bis(trimethylsilyl)aminoethyltriethoxysilane, N,N-bis(trimethylsilyl)aminoethylmethyldimethoxysilane, or N,N-bis(trimethylsilyl)aminoethylmethyldiethoxysilane.

4. The tire according to any one of claims 1 to 3, wherein the condensation-accelerating agent comprises an alkoxide, carboxylate, trialkylsiloxane, or acetylacetonate complex salt containing at least one kind of metal selected from the group consisting of titanium, zirconium, bismuth, aluminum, and tin.

5. The tire according to any one of claims 1 to 4, wherein the modified conjugated diene-based polymer has a ratio (Mw)/(Mn) of a weight-average molecular weight (Mw) in terms of polystyrene to a number-average molecular weight (Mn) before the modification measured by gel permeation chromatography of 1.02 to 2.0.

6. The tire according to claim 5, wherein the modified conjugated diene-based polymer has a ratio (Mw)/(Mn) of a weight-average molecular weight (Mw) in terms of polystyrene to a number-average molecular weight (Mn) before the modification measured by gel permeation chromatography of 1.02 to 1.5.

7. The tire according to any one of claims 1 to 6, wherein the modified conjugated diene-based polymer has a number-average molecular weight (Mn) before the modification of 100,000 to 500, 000.

8. The tire according to claim 7, wherein the modified conjugated diene-based polymer has a number-average molecular weight (Mn) before the modification of 120,000 to 300,000.

9. The tire according to any one of claims 1 to 8, wherein the rubber composition contains 52 mass% or more of the modified conjugated diene-based polymer in the rubber components.

10. The tire according to claim 9, wherein the rubber composition contains 55 mass% or more of the modified conjugated diene-based polymer in the rubber components.

11. The tire according to any one of claims 1 to 10, wherein the rubber composition is obtained by compounding 100 parts by mass of the rubber components with 1 to 10 parts by mass of sulfur.

12. The tire according to claim 1, wherein when a height, a pitch, and a lower side width of each of the turbulent flow-creating ridges are represented by h, p, and w, respectively, relationships of $1.0 \leq p/h \leq 50.0$ and $1.0 \leq (p-w)/w \leq 100.0$ are satisfied.

13. The tire according to claim 1 or 12, wherein when a pitch and a height of each of the turbulent flow-creating ridges are represented by p and h, respectively, a ratio p/h of the pitch to the height satisfies a relationship of $2.0 \leq p/h \leq 24.0$.

14. The tire according to claim 13, wherein the p/h satisfies a relationship of $10.0 \leq p/h \leq 20.0$.

15. The tire according to any one of claims 12 to 14, wherein the (p-w)/w satisfies a relationship of $4.0 \leq (p-w)/w \leq 39.0$.

16. The tire according to any one of claims 12 to 15, wherein the ridge height h of each of the turbulent flow-creating ridges falls within a range of $0.5 \, mm \leq h \leq 7 \, mm$, and the bottom side width w thereof falls within a range of $0.3 \, mm \leq h \leq 4$ mm.

17. The tire according to any one of claims 12 to 16, wherein angles of directions of the turbulent flow-creating ridges formed with respect to the radial direction are constant or vary.

18. The tire according to any one of claims 12 to 17, wherein the turbulent flow-creating ridges each have an apex at least inside the radial direction.

19. The tire according to any one of claims 12 to 18, wherein a direction in which the turbulent flow-creating ridges each extend is continuous or discontinuous with respect to the radial direction.

20. The tire according to any one of claims 12 to 19, wherein the turbulent flow-creating ridges are placed at nonuniform intervals with respect to the circumferential direction of the tire.

**21.** The run-flat tire according to any one of claims 1 to 20, wherein the reinforcing rubber for constituting the side portion has a crescent shape.

**22.** The tire according to any one of claims 1 to 21, wherein the tire comprises a tire for a heavy load.

**Patentansprüche**

**1.** Luftreifen umfassend turbulente Strömung verursachende Erhöhungen, die sich von einer inneren Umfangsseite zu einer äußeren Umfangsseite erstrecken, wobei die turbulente Strömung verursachenden Erhöhungen für eine Reifenoberfläche eines Reifenseitenabschnitts in Abständen in einer Umfangsrichtung des Reifens bereitgestellt werden, wobei:

die turbulente Strömung verursachenden Erhöhungen jeweils einen Kantenabschnitt, wenn in einem Bereich in einer radialen Richtung betrachtet, aufweisen, und Vorderwandflächen davon, auf die eine Luftströmung auftrifft, jeweils einen Vorderwandwinkel in einem Bereich von 70° bis 110° mit Bezug auf die Reifenfläche bilden; und
eine Kautschukzusammensetzung, die erhalten wird durch Compoundieren von 100 Masseteilen Kautschukkomponenten, die 10 Masse-% oder mehr eines modifizierten, konjugierten Polymers auf Dienbasis enthalten, das durch Einführen einer primären Aminogruppe oder eines Vorläufers erhalten wird, die/der in der Lage ist, eine primäre Aminogruppe durch Hydrolyse an einem Terminal eines konjugierten Polymers auf Dienbasis durch eine Modifikationsreaktion zwischen dem Terminal und einer Alkoxysilanverbindung herzustellen, wobei die primäre Aminogruppe oder der Vorläufer in der Lage ist, eine primäre Aminogruppe durch Hydrolyse herzustellen, und Hinzugeben eines kondensationsbeschleunigenden Mittels zu dem Modifikationsreaktionssystem während und/oder nach Abschluss der Modifikationsreaktion, wobei 10 bis 100 Massenteile Ruß, der einen Stickstoffabsorptions-spezifischen Oberflächenbereich von 20 bis 90 $m^2$/g aufweist, in einem seitenverstärkenden Kautschuk zur Bilden des Reifenseitenabschnitts verwendet wird.

**2.** Reifen nach Anspruch 1, wobei das konjugierte Polymer auf Dienbasis durch anionische Polymerisation einer konjugierten Dienverbindung als solcher oder der konjugierten Dienverbindung und einer aromatischen Vinylverbindung in einem organischen Lösungsmittel mit einer Alkalimetallverbindung als Initiator erhalten wird

**3.** Reifen nach Anspruch 1 oder 2, wobei die Alkoxysilanverbindung, die einen Vorläufer aufweist, der der in der Lage ist, eine primäre Aminogruppe durch Hydrolyse herzustellen,
N,N-Bis(trimethylsilyl)aminopropylmethyldimethoxysilan,
1-Trimethylsilyl-2,2-dimethoxy-1-aza-2-silacyclopentan,
N,N-Bis(trimethylsilyl)aminopropyltrimethoxysilan,
N,N-Bis(trimethylsilyl)aminopropyltriethoxysilan,
N,N-Bis(trimethylsilyl)aminopropylmethyldiethoxysilan,
N,N-Bis(trimethylsilyl)aminethyltrimethoxysilan,
N,N-Bis(trimethylsilyl)aminoethyltriethoxysilan,
N,N-Bis(trimethylsilyl)aminoethylmethyldimethoxysilan oder
N,N-Bis(trimethylsilyl)aminoethylmethyldiethoxysilan umfasst.

**4.** Reifen nach einem der Ansprüche 1 bis 3, wobei das kondensationsbeschleunigende Mittel ein Alkoxid, Carboxylat, Trialkylsiloxan oder Acetylacetonat-Komplexsalz umfasst, das mindestens eine Art Metal enthält ausgewählt aus der Gruppe bestehend aus Titan, Zirconium, Wismut, Aluminium und Zinn.

**5.** Reifen nach einem der Ansprüche 1 bis 4, wobei das modifizierte konjugierte Polymer auf Dienbasis ein Verhältnis (Mw)/(Mn) eines gewichtsdurchschnittlichen Molekulargewichts (Mw) mit Bezug auf Polystyrol zu einem zahlendurchschnittlichen Molekulargewicht (Mn) vor der Modifikation, durch Gelpermeationschromatographie gemessen, von 1,02 bis 2,0 aufweist.

**6.** Reifen nach Anspruch 5, wobei das modifizierte konjugierte Polymer auf Dienbasis ein Verhältnis (Mw)/(Mn) eines gewichtsdurchschnittlichen Molekulargewichts (Mw) mit Bezug auf Polystyrol zu einem zahlendurchschnittlichen Molekulargewicht (Mn) vor der Modifikation, durch Gelpermeationschromatographie gemessen, von 1,02 bis 1,5 aufweist.

**7.** Reifen nach einem der Ansprüche 1 bis 6, wobei das modifizierte konjugierte Polymer auf Dienbasis ein zahlendurchschnittlichen Molekulargewicht (Mn) vor der Modifikation von 100.000 bis 500.000 aufweist.

**8.** Reifen nach Anspruch 7, wobei das modifizierte konjugierte Polymer auf Dienbasis ein zahlendurchschnittlichen Molekulargewicht (Mn) vor der Modifikation von 120.000 bis 300.000 aufweist.

**9.** Reifen nach einem der Ansprüche 1 bis 8, wobei die Kautschukzusammensetzung 52 Masse-% oder mehr des modifizierten konjugierten Polymers auf Dienbasis in den Kautschukkomponenten enthält.

**10.** Reifen nach Anspruch 9, wobei die Kautschukzusammensetzung 55 Masse-% oder mehr des modifizierten konjugierten Polymers auf Dienbasis in den Kautschukkomponenten enthält.

**11.** Reifen nach einem der Ansprüche 1 bis 10, wobei die Kautschukzusammensetzung durch Compoundieren von 100 Massenteilen der Kautschukkomponenten mit 1 bis 10 Massenteilen Schwefel erhalten wird.

**12.** Reifen nach Anspruch 1, wobei, wenn eine Höhe, Neigung und eine untere Seitenbreite jeder der turbulente Strömung verursachenden Erhöhungen durch h, p bzw. w dargestellt sind, Verhältnissen von $1,0 \leq p/h \leq 50,0$ und $1,0 \leq (9-w)/w \leq 100,0$ entsprochen wird.

**13.** Reifen nach Anspruch 1 oder 12, wobei, wenn eine Neigung und eine Höhe jeder der turbulente Strömung verursachenden Erhöhungen durch p bzw. h dargestellt sind, ein Verhältnis p/h der Neigung zur Höhe einem Verhältnis von $2,0 \leq p/h \leq 24,0$ entspricht.

**14.** Reifen nach Anspruch 13, wobei p/h einem Verhältnis von $10,0 \leq p/h \leq 20,0$ entspricht.

**15.** Reifen nach einem der Ansprüche 12 bis 14, wobei (p-w)/w einem Verhältnis von $4,0 \leq (p-w)/w \leq 39,0$ entspricht.

**16.** Reifen nach einem der Ansprüche 12 bis 15, wobei die Erhöhungshöhe h jeder der turbulente Strömung verursachenden Erhöhungen innerhalb eines Bereichs von $0,5 \text{ mm} \leq h \leq 7 \text{ mm}$ fällt und die untere Seitenbreite w davon innerhalb eines Bereichs von $0,3 \text{ mm} \leq h \leq 4 \text{ mm}$ fällt.

**17.** Reifen nach einem der Ansprüche 12 bis 16, wobei Richtungswinkel der turbulente Strömung verursachenden Erhöhungen, die mit Bezug auf die Radialrichtung gebildet worden sind, konstant sind oder variieren.

**18.** Reifen nach einem der Ansprüche 12 bis 17, wobei die turbulente Strömung verursachenden Erhöhungen eine Spitze mindestens innerhalb der Radialrichtung aufweisen.

**19.** Reifen nach einem der Ansprüche 12 bis 18, wobei eine Richtung, in der die turbulente Strömung verursachenden Erhöhungen sich jeweils erstrecken, kontinuierlich oder diskontinuierlich mit Bezug auf die Radialrichtung sind.

**20.** Reifen nach einem der Ansprüche 12 bis 19, wobei die turbulente Strömung verursachenden Erhöhungen in nichtgleichförmigen Abständen mit Bezug auf die Umfangsrichtung des Reifens positioniert sind.

**21.** Notlaufreifen nach einem der Ansprüche 1 bis 20, wobei der verstärkende Kautschuk für das Bilden des Seitenabschnitts eine Halbmondform aufweist.

**22.** Reifen nach einem der Ansprüche 1 bis 21, wobei der Reifen einen Reifen für eine schwere Last umfasst

**Revendications**

**1.** Pneumatique, comprenant des crêtes créant un flux turbulent se prolongeant depuis un côté interne de circonférence vers un côté externe de circonférence, les crêtes créant un flux turbulent étant proposées pour une surface de pneumatique d'une portion latérale de pneumatique par intervalles dans un sens de la circonférence du pneumatique, dans lequel :

les crêtes créant un flux turbulent ont chacune une portion formant bord lorsque visualisées en coupe radiale, et leurs surfaces de paroi frontale sur lesquelles frappe un écoulement d'air forment chacune un angle de paroi frontale dans une plage de 70° à 110° par rapport à la surface du pneumatique; et
une composition de caoutchouc obtenue par malaxage de 100 parties en masse de composants de caoutchouc contenant 10 % en masse ou plus d'un polymère modifié à base de diène conjugué, qui est obtenu par l'introduction d'un groupe amino primaire ou d'un précurseur capable de produire un groupe amino primaire à travers l'hydrolyse à une terminaison d'un polymère à base de diène conjugué à travers une réaction de modification entre la terminaison et un composé alcoxysilane ayant le groupe amino primaire ou le précurseur capable de produire un groupe amino primaire à travers l'hydrolyse, et l'addition d'un agent d'accélération de la condensation au système réactionnel de modification durant et/ou après l'achèvement de la réaction de modification, avec 10 à 100 parties en masse de noir de carbone ayant une surface spécifique d'adsorption d'azote de 20 à 90 m$^2$/g est utilisée dans un caoutchouc de renforcement latéral pour la constitution de la portion latérale du pneumatique.

2. Pneumatique selon la revendication 1, dans lequel le polymère à base de diène conjugué est obtenu par polymérisation anionique d'un composé diène conjugué seul ou du composé diène conjugué et d'un composé vinylique aromatique dans un solvant organique avec un composé de métal alcalin comme initiateur.

3. Pneumatique selon la revendication 1 ou 2, dans lequel le composé alcoxysilane ayant un précurseur capable de produire un groupe amino primaire à travers l'hydrolyse comprend
du N,N-bis(triméthylsilyl)aminopropylméthyldiméthoxysilane,
du 1-triméthylsilyl-2,2-diméthoxy-1-aza-2-silacyclopentane,
du N,N-bis(triméthylsilyl)aminopropyltriméthoxysilane,
du N,N-bis(triméthylsilyl)aminopropyltriéthoxysilane,
du N,N-bis(triméthylsilyl)aminopropylméthyldiéthoxysilane,
du N,N-bis(triméthylsilyl)aminoéthyltriméthoxysilane,
du N,N-bis(triméthylsilyl)aminoéthyltriéthoxysilane,
du N,N-bis(triméthylsilyl)aminoéthylméthyldiméthoxysilane, ou
du N,N-bis(triméthylsilyl)aminoéthylméthyldiéthoxysilane.

4. Pneumatique selon l'une quelconque des revendications 1 à 3, dans lequel l'agent d'accélération de la condensation comprend un alcoxyde, un carboxylate, un trialkylsiloxane, ou un sel complexe d'acétonate d'acétyle contenant au moins un type de métal sélectionné parmi le groupe constitué du titane, du zirconium, du bismuth, de l'aluminium, et de l'étain.

5. Pneumatique selon l'une quelconque des revendications 1 à 4, dans lequel le polymère modifié à base de diène conjugué a un rapport (Mw)/(Mn) d'un poids moléculaire moyen en poids (Mw) en termes de polystyrène à un poids moléculaire moyen en nombre (Mn) avant la modification mesuré par chromatographie par perméation sur gel de 1,02 à 2,0.

6. Pneumatique selon la revendication 5, dans lequel le polymère modifié à base de diène conjugué a un rapport (Mw)/(Mn) d'un poids moléculaire moyen en poids (Mw) en termes de polystyrène à un poids moléculaire moyen en nombre (Mn) avant la modification mesuré par chromatographie par perméation sur gel de 1,02 à 1,5.

7. Pneumatique selon l'une quelconque des revendications 1 à 6, dans lequel le polymère modifié à base de diène conjugué a un poids moléculaire moyen en nombre (Mn) avant la modification de 100 000 à 500 000.

8. Pneumatique selon la revendication 7, dans lequel le polymère modifié à base de diène conjugué a un poids moléculaire moyen en nombre (Mn) avant la modification de 120 000 à 300 000.

9. Pneumatique selon l'une quelconque des revendications 1 à 8, dans lequel la composition de caoutchouc contient 52 % en masse ou plus du polymère modifié à base de diène conjugué dans les composants de caoutchouc.

10. Pneumatique selon la revendication 9, dans lequel la composition de caoutchouc contient 55 % en masse ou plus du polymère modifié à base de diène conjugué dans les composants de caoutchouc.

11. Pneumatique selon l'une quelconque des revendications 1 à 10, dans lequel la composition de caoutchouc est obtenue par malaxage de 100 parties en masse des composants de caoutchouc avec 1 à 10 partie(s) en masse de soufre.

**12.** Pneumatique selon la revendication 1, dans lequel lorsqu'une hauteur, un pas, et une largeur de côté inférieur de chacune des crêtes créant un flux turbulent sont représentés par h, p, et w, respectivement, les relations de $1,0 \leq p/h \leq 50,0$ et $1,0 \leq (p-w)/w \leq 100,0$ sont satisfaites.

**13.** Pneumatique selon la revendication 1 ou 12, dans lequel lorsqu'un pas et une hauteur de chacune des crêtes créant un flux turbulent sont représentés par p et h, respectivement, un rapport p/h du pas à la hauteur satisfait une relation de $2,0 \leq p/h \leq 24,0$.

**14.** Pneumatique selon la revendication 13, dans lequel le rapport p/h satisfait une relation de $10,0 \leq p/h \leq 20,0$.

**15.** Pneumatique selon l'une quelconque des revendications 12 à 14, dans lequel le (p-w)/w satisfait une relation de $4,0 \leq (p-w)/w \leq 39,0$.

**16.** Pneumatique selon l'une quelconque des revendications 12 à 15, dans lequel la hauteur de crête h de chacune des crêtes créant un flux turbulent tombe dans une plage de $0,5 \, mm \leq h \leq 7 \, mm$, et la largeur du côté inférieur w de celle-ci tombe dans une plage de $0,3 \, mm \leq h \leq 4 \, mm$.

**17.** Pneumatique selon l'une quelconque des revendications 12 à 16, dans lequel les angles des orientations des crêtes créant un flux turbulent formées par rapport au sens radial sont constants ou varient.

**18.** Pneumatique selon l'une quelconque des revendications 12 à 17, dans lequel les crêtes créant un flux turbulent ont chacune un apex au moins à l'intérieur du sens radial.

**19.** Pneumatique selon l'une quelconque des revendications 12 à 18, dans lequel une orientation dans laquelle les crêtes créant un flux turbulent se prolongent chacune est continue ou discontinue par rapport au sens radial.

**20.** Pneumatique selon l'une quelconque des revendications 12 à 19, dans lequel les crêtes créant un flux turbulent sont placées à des intervalles non uniformes par rapport au sens de la circonférence du pneumatique.

**21.** Pneumatique à mode de roulage à plat selon l'une quelconque des revendications 1 à 20, dans lequel le caoutchouc de renfort pour la constitution de la portion latérale a une forme de croissant.

**22.** Pneumatique selon l'une quelconque des revendications 1 à 21, dans lequel le pneumatique comprend un pneumatique pour une charge lourde.

FIG. 1

TIRE ROTATION
DIRECTION

FIG. 2

FIG. 3

FIG. 4

TIRE ROTATION
DIRECTION

FIG. 5

FIG. 6

FIG. 7

FIG. 8

FIG. 9

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007167821 B
- WO 2008114668 A
- JP 2006076431 A
- WO 0202356 A
- JP 2004074960 A
- JP 6053763 B
- JP 6057767 B
- WO 03087171 A
- JP 6206920 A
- JP 6199922 A
- JP 6199921 A